# EUROPEAN PATENT APPLICATION

(11) **EP 4 804 638 A1**
(43) Date of publication of application: **09.09.2026**
(21) Application number: 23957259.7
(22) Date of filing: 02.11.2023
(51) Int. Cl.: H04W 52/02

(54) **TRANSMISSION METHOD, COMMUNICATION DEVICE, AND STORAGE MEDIUM**

(71) Applicant: Shenzhen Transsion Holdings Co., Ltd., Shenzhen, Guangdong 518057 (CN)
(72) Inventor: WANG, Sha, Shenzhen, Guangdong 518057 (CN); XIE, Yili, Shenzhen, Guangdong 518057 (CN); HUANG, Wei, Shenzhen, Guangdong 518057 (CN)
(74) Representative: Barker Brettell LLP
(86) International application number: PCT/CN2023/129382
(87) International publication number: WO 2025/091389

(57) **Abstract**

The present application discloses a transmission method, a communication device, and a storage medium. The transmission method includes that: a network device transmits first information in a transmission mode determined based on second information, and a terminal device receives the first information. In this way, the number of transmissions of the first information can be effectively reduced in a multi-carrier scenario, thereby reducing energy consumption and/or operation cost.

## Description

### TECHNICAL FIELD

The present application relates to the field of communication technologies, and in particular, to a transmission method, a communication device, and a storage medium.

### BACKGROUND

In existing protocols, SIB1 (System Information Block 1, system information block 1) is a periodic common signal, meaning that the SIB1 will be transmitted at specified occasions regardless of whether it is needed or not.

During the conception and implementation of the present application, the inventors identified at least the following problems: in low-load scenarios, frequent transmission of SIB1 messages may lead to unnecessary data transmission in the network, thereby increasing energy consumption and/or operation cost. Therefore, it is necessary to seek an appropriate method to restrict the transmission of SIB1, so as to avoid unnecessary data transmission and further reduce energy consumption and/or operation cost.

The above description is intended to provide general background information and does not necessarily constitute prior art.

### SUMMARY

The main purpose of the present application is to provide a transmission method, a communication device, and a storage medium, aimed at solving the technical problem that, in a multi-carrier scenario, the number of times of transmissions of SIB1 are relatively large, thereby resulting in high power consumption and/or high operation cost.

The present application provides a transmission method that can be applied to a network device (such as a base station), including:
transmitting first information in a transmission mode determined based on second information.

Optionally, the method further includes at least one of the following:
the second information includes at least one of: a radio resource control state, active time of cell discontinuous transmission, or inactive time of cell discontinuous transmission;
the transmission mode includes at least one of: transmitting on demand first information, not transmitting the first information, transmitting the first information with a regular periodicity, or transmitting the first information with a dynamically adjusted periodicity;
the first information includes: system information block 1.

Optionally, the radio resource control state includes at least one of:
a radio resource control inactive state;
a radio resource control idle state;
a radio resource control connected state.

Optionally, the method further includes at least one of the following:
the transmitting the on demand first information includes: in response to receiving an uplink wake-up signal, transmitting the first information at a transmission occasion of the first information satisfying a first preset rule;
the not transmitting the first information includes: indicating, by transmitting downlink control information and/or a radio resource control message to a terminal device, whether a network device transmits the first information at a corresponding transmission occasion of the first information within a first preset time period;
the transmitting the first information with the regular periodicity includes: transmitting the first information at respective transmission occasions of the first information within a second preset time period;
the transmitting the first information with the dynamically adjusted periodicity is: dynamically adjusting a retransmission occasion of the first information by transmitting the downlink control information and/or the radio resource control message to the terminal device.

Optionally, the method further includes at least one of the following:
the first preset time period is the inactive time of cell discontinuous transmission;
the second preset time period is the active time of cell discontinuous transmission;
the satisfying the first preset rule includes at least one of:
   the transmission occasion being located no less than X slots after a slot in which the uplink wake-up signal is transmitted, where X is a positive integer;
   the position of no less than X slots after the uplink wake-up signal overlapping with a slot in which a nearest retransmission occasion of the first information after the uplink wake-up signal is located;
   the transmission occasion being located no less than Z slots after the slot in which the uplink wake-up signal is transmitted, where Z is a positive integer;
   the position of no less than Z slots after the uplink wake-up signal overlapping with a slot in which a Y-th nearest retransmission occasion of the first information after the uplink wake-up signal is located, where both Z and Y are positive integers.

Optionally, the method further includes at least one of the following:
within the second preset time period, the transmission mode is transmitting the first information with the regular periodicity;
within the second preset time period, the transmission mode is not transmitting the first information;
within the first preset time period and/or the second preset time period, the transmission mode is transmitting the on demand first information;
within the first preset time period and/or the second preset time period, the transmission mode is transmitting the first information with the dynamically adjusted periodicity;
within the first preset time period, the first information is not transmitted.

Optionally, the method further includes including at least one of the following:
a value of X is less than a repetition period of the first information;
the uplink wake-up signal is a periodic signal;
the uplink wake-up signal is a pseudo-random sequence related to at least one of: a radio frame number, a slot number, or a cell identity;
the uplink wake-up signal is a reserved preamble in a random access preamble sequence set;
a reception occasion of the uplink wake-up signal is the same as a reception occasion of Msg1;
the reception occasion of the uplink wake-up signal is a valid uplink symbol with an offset of no less than X slots before the nearest occasion for transmission of the first information after the uplink wake-up signal;
the reception occasion of the uplink wake-up signal is a valid uplink symbol with an offset of no less than Z slots before a Y-th nearest occasion for transmission of the first information after the uplink wake-up signal;
the uplink wake-up signal is received on a non-anchor carrier;
the reception occasion and/or frequency domain position of the uplink wake-up signal is determined from higher layer information on an anchor carrier associated with the non-anchor carrier.

Optionally, the method further includes at least one of the following:
the non-anchor carrier and the anchor carrier are inter-band and co-located carriers, intra-band carriers, and/or inter-band and non-co-located carriers;
the downlink control information includes at least one of: a dynamic adjustment field for a transmission periodicity of the first information, or an activation or deactivation indication field for the first information.

Optionally, a number of bits of the dynamic adjustment field for the transmission periodicity of the first information is related to a multiplexing pattern of synchronization signal block and control resource set #0.

Optionally, the activation or deactivation indication field for the first information is used to indicate whether the base station performs transmission of the first information at one or more occasions within repetition periods of the first information.

The present application further provides a transmission method that can be applied to a terminal device (such as a mobile phone), including:
receiving first information, where the first information is transmitted by a network device in a transmission mode determined based on second information.

Optionally, the method includes at least one of the following:
the second information includes at least one of: a radio resource control state, active time of cell discontinuous transmission, or inactive time of cell discontinuous transmission;
the transmission mode includes at least one of: transmitting on demand first information, not transmitting the first information, transmitting the first information with a regular periodicity, or transmitting the first information with a dynamically adjusted periodicity;
the first information includes: system information block 1.

Optionally, a reception occasion of the first information includes at least one of:
a position of an occasion of a legacy repetition period of the first information;
a position of an occasion of a dynamically adjusted repetition period of the first information;
a position of an occasion of a nearest repetition period of the first information after an uplink wake-up signal;
a position of an occasion of a Y-th repetition period of the first information after the uplink wake-up signal, where Y is a positive integer.

Optionally, taking SIB1 as an example, for multiplexing pattern 1 of SSB and CORESET#0, a legacy repetition period of the first information is 20ms; for multiplexing pattern 2 or 3 of SSB and CORESET#0, a legacy repetition period of the first information is a transmission periodicity of an SSB associated with the SIB1.

Optionally, the method further includes at least one of:
performing random access according to the first information;
performing data transmission according to the first information;
performing paging reception according to the first information.

Optionally, the radio resource control state includes at least one of:
a radio resource control inactive state;
a radio resource control idle state;
a radio resource control connected state.

Optionally, the method further includes at least one of the following:
within the second preset time period, the transmission mode is transmitting the first information with the regular periodicity;
within the second preset time period, the transmission mode is not transmitting the first information;
within the first preset time period and/or the second preset time period, the transmission mode is transmitting the on demand first information;
within the first preset time period and/or the second preset time period, the transmission mode is transmitting the first information with the dynamically adjusted periodicity;
within the first preset time period, the first information is not received.

Optionally, the method further includes at least one of the following:
the uplink wake-up signal is a periodic signal;
the uplink wake-up signal is a pseudo-random sequence related to at least one of: a radio frame number, a slot number, or a cell identity;
the uplink wake-up signal is a reserved preamble in a random access preamble sequence set;
a transmission occasion of the uplink wake-up signal is the same as a transmission occasion of Msg1;
the transmission occasion of the uplink wake-up signal is a valid uplink symbol with an offset of no less than X slots before a nearest occasion for receiving the first information after the uplink wake-up signal, where X is a positive integer;
the transmission occasion of the uplink wake-up signal is a valid uplink symbol with an offset of no less than Z slots before a Y-th nearest occasion of the first information to be received after the uplink wake-up signal, where both Z and Y are positive integers;
the uplink wake-up signal is transmitted on a non-anchor carrier;
the transmission occasion and/or frequency domain position of the uplink wake-up signal is determined from higher layer information on an anchor carrier associated with the non-anchor carrier.

The present application further proposes a transmission apparatus including:
a transmitting module, configured to transmit first information in a transmission mode determined based on second information.

The present application further provides a transmission apparatus including:
a receiving module, configured to receive first information, where the first information is transmitted by a network device in a transmission mode determined based on second information.

The present application further provides a communication device including: a memory, a processor, and a processing program stored in the memory and executable on the processor, and when the processing program is executed by the processor, any one of the above transmission methods is implemented. The communication devices mentioned in the present application may be a terminal device (such as a smart terminal, specifically a mobile phone) or a network device (such as a base station). The specific reference shall be clarified in combination with the context.

The present application further provides a storage medium having a computer program stored thereon, and when the computer program is executed by a processor, the transmission method as described in any of the above embodiments is implemented.

In the technical solutions of the present application, the network device transmits the first information in the transmission mode determined based on the second information. the number of transmissions of the first information can be effectively reduced in a multi-carrier scenario, thereby reducing energy consumption and/or operation cost.

### BRIEF DESCRIPTION OF DRAWINGS

The accompanying drawings, which are incorporated in this specification and constitute a part of this specification, illustrate embodiments consistent with the present application and, together with the description, serve to explain the principles of the present application. In order to more clearly describe the technical solutions in embodiments of the present application, in the following, the drawings that need to be used in the description of the embodiments will be briefly introduced. Apparently, for the persons of ordinary skill in the art, other drawings can be obtained based on these drawings without creative labor.
FIG. 1 is a schematic diagram of a hardware structure of a mobile terminal for implementing various embodiments of the present application;
FIG. 2 is an architectural diagram of a communication network system provided in an embodiment of the present application;
FIG. 3 is a schematic diagram of a hardware structure of a controller 140 involved in an embodiment of a transmission method of the present application;
FIG. 4 is a schematic diagram of a hardware structure of a network node 150 involved in an embodiment of a transmission method of the present application;
FIG. 5 is a schematic flowchart of a transmission method according to a first embodiment of the present application;
FIG. 6 is a schematic diagram showing that higher layer information on an anchor carrier defines an uplink wake-up signal for waking up SIB1 transmission on a non-anchor carrier, according to a second embodiment of the present application;
FIG. 7 is a schematic diagram of a type of SIB1 transmission based on an uplink wake-up signal according to the second embodiment of the present application;
FIG. 8 is a schematic diagram of another type of SIB1 transmission based on an uplink wake-up signal according to the second embodiment of the present application;
FIG. 9 is a schematic diagram of a type of SIB1 transmission based on an uplink wake-up signal according to a third embodiment of the present application;
FIG. 10 is a schematic diagram of another type of SIB1 transmission based on an uplink wake-up signal according to the third embodiment of the present application;
FIG. 11 is a schematic diagram of a type of SIB1 transmission based on an uplink wake-up signal according to a fourth embodiment of the present application;
FIG. 12 is a schematic diagram of another type of SIB1 transmission based on an uplink wake-up signal according to the fourth embodiment of the present application;
FIG. 13 is a schematic diagram of a type of SIB1 transmission based on an uplink wake-up signal according to a fifth embodiment of the present application;
FIG. 14 is a schematic diagram of a type of SIB1 transmission according to a sixth embodiment of the present application;
FIG. 15 is a schematic diagram of a type of SIB1 transmission according to a seventh embodiment of the present application;
FIG. 16 is a schematic diagram of a type of SIB1 transmission according to an eighth embodiment of the present application;
FIG. 17 is a schematic flowchart of a transmission method according to a ninth embodiment of the present application;
FIG. 18 is a schematic diagram of an interaction process between a network device and a terminal device in a transmission method according to a tenth embodiment of the present application;
FIG. 19 is schematic structural diagram I of a processing apparatus provided in an embodiment of the present application;
FIG. 20 is schematic structural diagram II of a processing apparatus provided in an embodiment of the present application;
FIG. 21 is schematic structural diagram of a communication device provided in an embodiment of the present application.

The purpose realization, functional features, and advantages of the present application will be further described with reference to the accompanying drawings in conjunction with embodiments. With the above drawings, clear embodiments of the present application have been shown, and will be described in more detail hereinafter. These drawings and textual descriptions are not intended to limit the scope of the concept of the present application in any way, but rather to illustrate the concept of the present application for those skilled in the art by referring to specific embodiments.

### DESCRIPTION OF EMBODIMENTS

Exemplary embodiments will be described in detail, and examples thereof are shown in the drawings. When the following description refers to the drawings, same numbers in different drawings represent the same or similar elements unless otherwise indicated. The implementations described in the following exemplary embodiments do not represent all implementations consistent with the present application. On the contrary, they are only examples of apparatuses and methods consistent with some aspects of the present application as detailed in the appended claims.

It should be noted that the terms "including", "comprising", or any other variants thereof are intended to cover non-exclusive inclusion, so that a process, method, object, or apparatus that includes a series of elements includes not only such elements, but also other elements that are not explicitly listed, or also elements inherent in such process, method, object, or apparatus. An element defined by a statement "including a/an/one..." does not exclude an existence of another identical element in the process, method, object, or apparatus that includes such element, without further restrictions. In addition, components, features, and elements with same names in different embodiments of the present application may have the same or different meanings, and a specific meaning needs to be determined based on an interpretation in the specific embodiment or in further combination with the context of the specific embodiment.

It should be understood that although the terms "first", "second", "third", and the like may be used herein to describe various types of information, such information should not be limited to these terms. These terms are only used to distinguish a same type of information from each other. For example, first information may also be referred to as second information, and similarly, second information may also be referred to as first information without departing from the scope herein. Depending on the context, the word "if" as used herein may be interpreted as "when..." or "at a time when..." or "in response to determination". Moreover, as used herein, singular forms "a/an", "one", and "the" are intended to also include a plural form, unless the context indicates otherwise. It should be further understood that the terms "include" and "comprise" indicate an existence of the described feature, step, operation, element, component, item, category, and/or group, but do not exclude an existence, an occurrence, or an addition of one or more other features, steps, operations, elements, components, items, categories, and/or groups. The terms "or", "and/or", "including at least one of the following", and the like used in the present application may be interpreted as inclusive or imply any one or any combination thereof. For example, "including at least one of the following: A, B, C" means "any of the following: A; B; C; A and B; A and C; B and C; A and B and C". Alternatively, "A, B or C" or "A, B and/or C" means "any of the following: A; B; C; A and B; A and C; B and C; A and B and C". Exceptions to this definition occur only when combinations of elements, functions, steps, or operations are inherently mutually exclusive in certain ways.

It should be understood that although the steps in the flowcharts in the embodiments of the present application are displayed sequentially as indicated by arrows, these steps are not necessarily executed sequentially in the order indicated by the arrows. Unless explicitly stated herein, there are no strict sequence restrictions for the execution of these steps, which can be performed in other sequences. Moreover, at least a portion of the steps in the flowchart may include multiple sub-steps or stages, which are not necessarily executed and completed at the same time, but may be executed at different moments. The execution order thereof is not necessarily sequential, and they may be executed in turn or alternately with other steps or at least a portion of the sub-steps or stages of other steps.

Depending on the context, the word "if", "in case" as used herein may be interpreted as "when..." or "at a time when..." or "in response to determination" or "in response to detection". Similarly, depending on the context, the phrase "if it is determined that" or "if it is detected that (a stated condition or event)" may be interpreted as "when it is determined that" or "in response to determination of" or "when it is detected that (the stated condition or event)" or "in response to detection of (the stated condition or event)".

It should be noted that step codes such as S10 and S20 herein are used in order to more clearly and concisely describe the corresponding content, and do not constitute a substantive restriction on the sequence. During implementation, those skilled in the art may execute S20 first and then S10, and these should be within the protection scope of the present application.

It should be understood that the specific embodiments described herein are only used to explain the present application and are not intended to limit the present application.

In subsequent descriptions, suffixes such as "module", "component", or "unit" used to represent elements are used only to facilitate the description of the present application, and have no specific meaning per se. Therefore, "module", "component", or "unit" may be used in a mixed manner.

The communication device mentioned in the present application may be a terminal device (e.g., a mobile terminal, such as a mobile phone) or a network device (e.g., a base station). The specific reference thereof shall be clarified in combination with the context.

Optionally, the terminal device may be implemented in various forms. For example, the terminal device described in the present application may include a smart terminal, such as a mobile phone, a tablet, a laptop, a handheld computer, a personal digital assistant (Personal Digital Assistant, PDA), a portable media player (Portable Media Player, PMP), a navigation apparatus, a wearable device, a smart bracelet, a pedometers, etc., and a fixed terminal, such as a digital TV, a desktop computer, etc.

In the following description, a mobile terminal will be taken as an example for illustration. Those skilled in the art will understand that in addition to elements specifically used for mobile purposes, the configuration according to the embodiments of the present application may also be applied to fixed-type terminals.

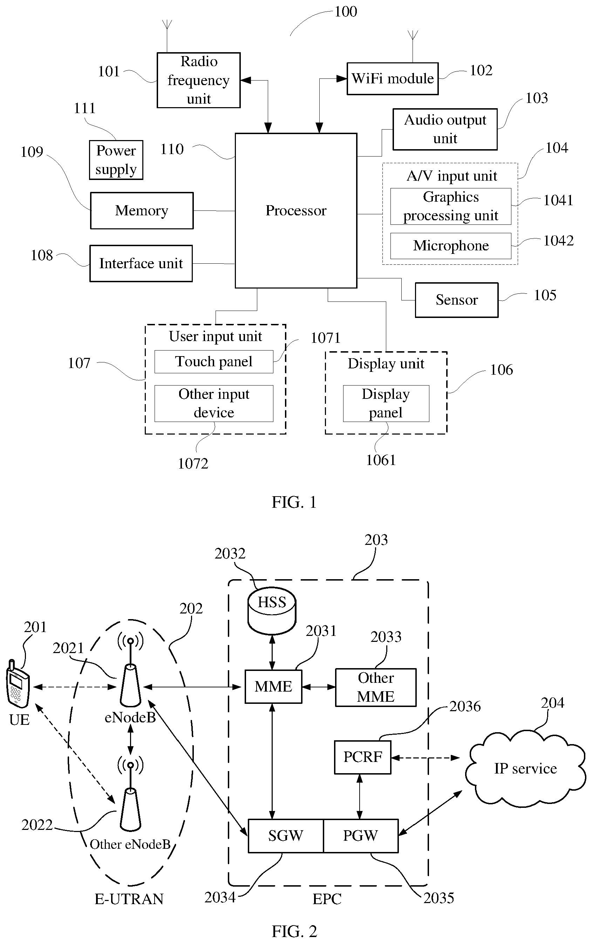

Please refer to FIG. 1, which is a schematic diagram of a hardware structure of a mobile terminal for implementing various embodiments of the present application. The mobile terminal 100 may include: an RF (Radio Frequency, Radio Frequency) unit 101, a WiFi module 102, an audio output unit 103, an A/V (Audio/Video) input unit 104, a sensor 105, a display unit 106, a user input unit 107, an interface unit 108, a memory 109, a processor 110, and a power supply 111. Those skilled in the art can understand that the mobile terminal structure shown in FIG. 1 does not constitute a limitation on the mobile terminal. The mobile terminal may include more or fewer components than shown, or certain components may be combined, or different component arrangements may be used.

The following is a detailed introduction to the components of the mobile terminal in conjunction with FIG. 1.

The radio frequency unit 101 may be used to receive and transmit information, or receive and transmit a signal during a call. Specifically, after receiving downlink information from a base station, it transmits the downlink information to the processor 110 for processing; in addition, it transmits uplink data to the base station. Generally, the radio frequency unit 101 includes, but is not limited to, an antenna, at least one amplifier, a transceiver, a coupler, a low noise amplifier, a duplexer, etc. In addition, the radio frequency unit 101 may also communicate with a network and other devices via wireless communication. The above wireless communication may use any communication standard or protocol, including but not limited to a GSM (Global System of Mobile Communication, Global System of Mobile Communication), a GPRS (General Packet Radio Service, General Packet Radio Service), CDMA2000 (Code Division Multiple Access 2000, Code Division Multiple Access 2000), WCDMA (Wideband Code Division Multiple Access, Wideband Code Division Multiple Access), TD-SCDMA (Time Division-SyncLronous Code Division Multiple Access, Time Division Synchronous Code Division Multiple Access), FDD-LTE (Frequency Division Duplexing-Long Term Evolution, Frequency Division Duplexing-Long Term Evolution), TDD-LTE (Time Division Duplexing-Long Term Evolution, Time Division Duplexing-Long Term Evolution), 5G, 6G, or the like.

WiFi belongs to short range wireless transmission technology. The mobile terminal may provide a user with assistance in receiving and transmitting emails, browsing web pages, and accessing streaming media through the WiFi module 102. The WiFi module 102 provides the user with wireless broadband Internet access. Although FIG. 1 shows the WiFi module 102, it should be understood that it is not a necessary component of the mobile terminal and may be omitted as needed without changing the nature of the invention.

The audio output unit 103 may convert audio data received by the RF unit 101 or the WiFi module 102 or stored in the memory 109 into an audio signal and output it as sound when the mobile terminal 100 is in a call signal receiving mode, a call mode, a recording mode, a voice recognition mode, a broadcast receiving mode, etc. Moreover, the audio output unit 103 may also provide audio output related to specific functions performed by the mobile terminal 100 (for example, a sound for call signal reception, a sound for message reception, etc.). The audio output unit 103 may include a speaker, a buzzer, etc.

The A/V input unit 104 is used to receive an audio signal or a video signal. The A/V input unit 104 may include a graphics processing unit (Graphics Processing Unit, GPU) 1041 and a microphone 1042, where the graphics processing unit 1041 processes image data of a static picture or a video obtained by an image capture apparatus (such as a camera) in a video capture mode or an image capture mode. The processed image frame may be displayed in the display unit 106. The image frames that have already been processed by the graphics processing unit 1041 may be stored in the memory 109 (or other storage medium) or transmitted via the radio frequency unit 101 or the WiFi module 102. The microphone 1042 may receive a sound (audio data) through the microphone 1042 in an operating mode, such as a phone call mode, a recording mode, a voice recognition mode, etc., and may process such sound into audio data. The processed audio (voice) data may be converted into a format that can be transmitted to a mobile communication base station via the radio frequency unit 101 for output in the phone call mode. The microphone 1042 may implement various types of noise elimination (or suppression) algorithms to eliminate (or suppress) a noise or an interference generated during the receiving and transmitting of audio signals.

The mobile terminal 100 also includes at least one sensor 105, such as a light sensor, a motion sensor, and other sensors. Optionally, the light sensor includes an ambient light sensor and a proximity sensor. Optionally, the ambient light sensor may adjust a brightness of a display panel 1061 based on a brightness of an ambient light. The proximity sensor may turn off the display panel 1061 and/or backlight when the mobile terminal 100 is moved to an ear. As a type of the motion sensor, an accelerometer sensor may detect magnitudes of acceleration in various directions (typically three axes), and may detect a magnitude and a direction of gravity when being stationary, thus it may be used for applications of recognizing a posture application of a mobile phone (such as switching between portrait screen and landscape screen, a related game, a magnetometer posture calibration), and also used for vibration recognizing related functions (such as a pedometer, a knocking), etc. Other sensors may also be configured for a mobile phone, such as a fingerprint sensor, a pressure sensor, an iris sensor, a molecular sensor, a gyroscope, a barometer, a hygrometer, a thermometer, an infrared sensor, which will not be discussed here.

The display unit 106 is used to display information input by or provided for the user. The display unit 106 may include a display panel 1061, which may be configured in forms of a liquid crystal display (Liquid Crystal Display, LCD), or an organic light emitting diode (Organic Light-Emitting Diode, OLED), etc.

The user input unit 107 may be used to receive input numeric or character information and generate key signal inputs related to user settings and function control of the mobile terminal. Optionally, the user input unit 107 may include a touch panel 1071 and other input devices 1072. The touch panel 1071, also referred to as a touch screen, may collect a touch operation of the user on or near the touch panel 1071 (such as an operation of the user using any suitable object or accessory such as a finger or stylus on or near the touch panel 1071), and drive a corresponding connection apparatus according to a preset program. The touch panel 1071 may include two parts: a touch detection apparatus and a touch controller. Optionally, the touch detection apparatus detects a touch orientation of the user, detects a signal brought about by the touch operation, and transmits the signal to the touch controller; and the touch controller receives touch information from the touch detection apparatus, converts the touch information into contact coordinates, transmits the contact coordinates to the processor 110, and may receive a command from the processor 110 and execute the command. In addition, the touch panel 1071 may be implemented using various types such as resistive type, capacitive type, infrared, surface acoustic wave, etc. In addition to the touch panel 1071, the user input unit 107 may also include other input devices 1072. Optionally, the other input devices 1072 may include, but are not limited to, one or more of a physical keyboard, a function key (such as a volume control button, a switch button, etc.), a trackball, a mouse, a joystick, etc., which are not limited herein.

Optionally, the touch panel 1071 may cover the display panel 1061, and when the touch panel 1071 detects a touch operation on or near the touch panel 1071, the touch panel 1071 transmits the touch operation to the processor 110 to determine a type of the touch event. Subsequently, the processor 110 provides a corresponding visual output on the display panel 1061 based on the type of the touch event. Although in FIG. 1, the touch panel 1071 and the display panel 1061 are two independent components that implement the input and output functions of the mobile terminal, in some embodiments, the touch panel 1071 and the display panel 1061 may be integrated to achieve the input and output functions of the mobile terminal, which are not limited herein.

The interface unit 108 serves as an interface through which at least one external apparatus may be connected to the mobile terminal 100. For example, the external apparatus may include a wired or wireless headphone port, an external power supply (or a battery charger) port, a wired or wireless data port, a memory card port, a port for connecting an apparatus with an identification module, an audio input/output (I/O) port, a video I/O port, an earphone port, etc. The interface unit 108 may be used to receive an input from the external apparatus (e.g., data information, power, etc.) and transmit the received input to one or more elements within the mobile terminal 100 or may be used to transfer data between the mobile terminal 100 and the external apparatus.

The memory 109 may be used to store a software program and various data. The memory 109 may mainly include a program storage area and a data storage area. Optionally, the program storage area may store an operating system, an application program required for at least one function (such as, a sound playback function, an image playback function, etc.), etc.; and the data storage area may store data (such as audio data, phonebook, etc.) created based on the use of the mobile phone. In addition, the memory 109 may include a high-speed random access memory, and may also include a non-transitory memory, such as at least one disk storage device, flash memory device, or other non-transitory solid-state storage device.

The processor 110 is a control center of the mobile terminal, which connects various parts of the entire mobile terminal using various interfaces and lines. The processor 110 performs various functions and processes data of the mobile terminal by running or executing the software program and/or modules stored in the memory 109, as well as calling the data stored within the memory 109, thereby performing overall monitoring of the mobile terminal. The processor 110 may include one or more processing units; preferably, the processor 110 may integrate an application processor and a modem processor. Optionally, the application processor mainly processes the operating system, the user interface, the application program, etc., while the modem processor mainly processes the wireless communication. It is understood that the above modem processor may not be integrated into the processor 110.

The mobile terminal 100 may also include the power supply 111 (such as, a battery) that supplies power to various components. Preferably, the power supply 111 may be logically connected to the processor 110 through a power management system, thereby achieving functions such as charging management, discharging management, and power consumption management through the power management system.

Although not shown in FIG. 1, the mobile terminal 100 may also include a Bluetooth module, etc., which will not be described in detail here.

In order to facilitate understanding of the embodiments of the present application, the communication network system on which the mobile terminal of the present application is based will be described below.

Please refer to FIG. 2, which is an architecture diagram of a communication network system provided by an embodiment of the present application. The communication network system is an LTE system of general mobile communication technology, which includes UE (User Equipment, User Equipment) 201, an E-UTRAN (Evolved UMTS Terrestrial Radio Access Network, Evolved UMTS Terrestrial Radio Access Network) 202, an EPC (Evolved Packet Core, Evolved Packet Core) 203 and an IP service 204 of an operator, that are communicatively connected in sequence.

Optionally, the UE 201 may be the above terminal 100, which will not be repeated here.

The E-UTRAN 202 includes an eNodeB 2021 and other eNodeB 2022. Optionally, the eNodeB 2021 may be connected to the other eNodeB 2022 via a backhaul (backhaul) (such as an X2 interface); the eNodeB 2021 may be connected to the EPC 203, and the eNodeB 2021 may provide the UE 201with access to the EPC 203.

The EPC 203 may include an MME (Mobility Management Entity, Mobility Management Entity) 2031, an HSS (Home Subscriber Server, Home Subscriber Server) 2032, other MME 2033, an SGW (Serving Gate Way, Serving Gate Way) 2034, a PGW (PDN Gate Way, Packet Data Network Gateway) 2035, a PCRF (Policy and Charging Rules Function, Policy and Charging Rules Function) 2036, etc. Optionally, the MME 2031 is a control node which handles signaling between the UE 201 and the EPC 203, providing bearer and connection management. The HSS 2032 is used to provide registers to manage functions such as home location registers (not shown), and to store user specific information about service characteristics, data rates, etc. All user data may be transmitted through the SGW 2034. The PGW 2035 may provide IP address allocation and other functions for the UE 201. The PCRF 2036 is a policy and billing control policy decision point for service data flows and IP bearer resources, which selects and provides an available policy and a billing control decision for a policy and billing execution function unit (not shown in the figure).

The IP service 204 may include the Internet, intranet, IMS (IP Multimedia Subsystem, IP Multimedia Subsystem), or other IP services.

Although the above is described by taking the LTE system as an example, those skilled in the art should be aware that the present application is not only applicable to LTE systems, but also applicable to other wireless communication systems, such as GSM, CDMA2000, WCDMA, TD-SCDMA, 5G, a future new network system (such as 6G), and the like, which are not limited herein.

Based on the above hardware structure of the mobile terminal and the communication network system, various embodiments of the present application are proposed.

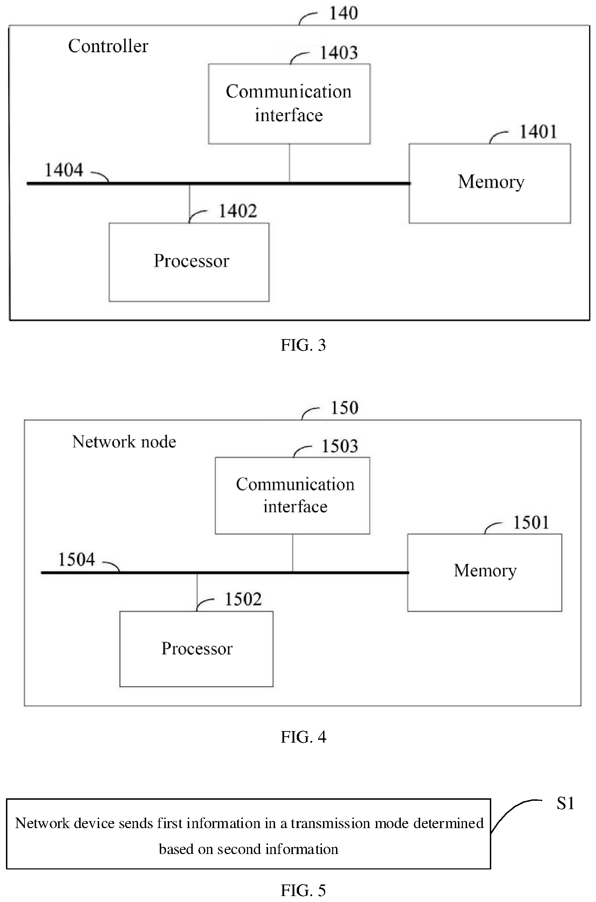

FIG. 3 is a schematic diagram of a hardware structure of a controller 140 provided in the present application. The controller 140 includes a memory 1401 and a processor 1402, where the memory 1401 is configured to store program instructions, and the processor 1402 is configured to call the program instructions in the memory 1401 to execute the steps executed by the controller in the above first method embodiment. The implementation principles and beneficial effects are similar, and will not be repeated here.

Optionally, the above controller further includes a communication interface 1403, which may be connected to the processor 1402 through a bus 1404. The processor 1402 may control the communication interface 1403 to implement receiving and transmitting functions of the controller 140.

FIG. 4 is a schematic diagram of a hardware structure of a network node 150 provided in the present application. The network node 150 includes a memory 1501 and a processor 1502, where the memory 1501 is configured to store program instructions, and the processor 1502 is configured to call the program instructions in the memory 1501 to execute the steps performed by a first node in the above first method embodiment. The implementation principles and beneficial effects are similar, and will not be repeated here.

Optionally, the above controller further includes a communication interface 1503, which may be connected to the processor 1502 through a bus 1504. The processor 1502 may control the communication interface 1503 to implement receiving and transmitting functions of the network node 150.

The integrated modules implemented in the form of software functional modules mentioned above may be stored in a computer-readable storage medium. The above software functional modules are stored in a storage medium, and include several instructions to cause a computer device (which may be a personal computer, a server, or a network device, etc.) or a processor (English: processor) to perform some steps of the various method embodiments of the present application.

Technical terms involved in the embodiments:
NES: Network Energy Saving, network energy saving;
CC: Component Carrier, component carrier;
PBCL: PLysical Broadcast CLannel, physical broadcast channel;
SSB: Synchronization Signal and PBCH block, synchronization signal and PBCH block;
CORESET: Control Resource SET, control resource set;
RRC: Radio Resource Control, radio resource control;
RRC Inactive: radio resource control inactive state;
RRC Idle: radio resource control idle state;
RRC Connected: radio resource control connected state;
cell DTX: Discontinuous Transmission, cell discontinuous transmission;
Cell DRX: Discontinuous Reception, cell discontinuous reception;
SIB1: System Information Block 1, system information block 1;
WUS: Wake Up Signal, wake-up signal;
DCI: Downlink Control Information, downlink control information;
inter-band: inter-band;
intra-band: intra-band.

### First embodiment

Refer to FIG. 5, which is a schematic flowchart of a transmission method according to the first embodiment of the present application. The transmission method of the embodiment of the present application may be applied to a network device (such as a base station), and includes the following steps.

S1: the network device transmits first information in a transmission mode determined based on second information.

Optionally, the second information includes at least one of the following: a radio resource control state, active time of cell discontinuous transmission, or inactive time of cell discontinuous transmission.

Optionally, the transmission mode of the first information adopted by the network device is determined from at least one of the radio resource control state, the active time of cell discontinuous transmission, or the inactive time of cell discontinuous transmission.

Optionally, the transmission mode includes at least one of the following: transmitting the demand first information, not transmitting the first information, transmitting the first information with a regular periodicity, or transmitting the first information with a dynamically adjusted periodicity.

Optionally, the first information includes: system information block 1 and/or system information blocks other than the system information block 1.

Optionally, the system information blocks other than the system information block 1 may be system information such as SIB2 to SIB21.

Optionally, the system information blocks other than the system information block 1 may also be other newly added system information, such as those following SIB21.

Optionally, the solution of this embodiment may be applied to a low-load scenario, for example, a scenario where traffic load of a cell is relatively low or the number of terminal devices in the cell is relatively small.

Optionally, the solution of this embodiment may be applied to a multi-carrier scenario, for example, a multi-carrier scenario where CCs (Component Carriers, component carriers) are co-located, or a multi-carrier scenario where CCs (Component Carriers, component carriers) are not co-located.

Optionally, the solution of this embodiment may also be applied to both a low-load scenario and a multi-carrier scenario simultaneously.

Periodic transmission of SIB1 messages may increase network energy consumption and operation cost in the low-load scenario and/or the multi-carrier scenario. For example, in the low-load scenario, there may be few or no terminal devices requiring to receive a system information. To address this issue, the network device transmits the first information in the transmission mode determined according to the second information, thereby restricting transmission of the first information, such as SIB1, so as to reduce network energy consumption and lower operation cost.

Optionally, the radio resource control state includes at least one of the following: an RRC_INACTIVE state, an RRC_IDLE state, or an RRC_CONNECTED state.

Optionally, the transmitting the on demand first information includes: in response to receiving an uplink wake-up signal, the network device transmits the first information at a transmission occasion satisfying a first preset rule.

Optionally, the uplink wake-up signal is transmitted by a terminal device according to an actual service requirement.

Optionally, the satisfying the first preset rule includes at least one of the following:
the transmission occasion being located no less than X slots after a slot in which the uplink wake-up signal is transmitted, where X is a positive integer;
the position of no less than X slots after the uplink wake-up signal overlapping with a slot in which the nearest retransmission occasion of the first information after the uplink wake-up signal is located;
the transmission occasion being located no less than Z slots after the slot in which the uplink wake-up signal is transmitted, where Z is a positive integer;
the position of no less than Z slots after the uplink wake-up signal overlapping with a slot in which the Y-th nearest retransmission occasion of the first information after the uplink wake-up signal is located, where both Z and Y are positive integers.

Optionally, a value of X is less than a repetition period of the first information.

Optionally, the not transmitting the first information includes: indicating, by transmitting downlink control information and/or a radio resource control message to the terminal device, whether the network device transmits the first information at a corresponding transmission occasion of the first information within a first preset time period.

Optionally, the first preset time period is the inactive time of cell discontinuous transmission.

Optionally, the transmitting the first information with the regular periodicity includes: transmitting the first information at respective transmission occasions of the first information within a second preset time period.

Optionally, the second preset time period is the active time of cell discontinuous transmission.

Optionally, the transmitting the first information with the dynamically adjusted periodicity is: dynamically adjusting a retransmission occasion of the first information by transmitting the downlink control information and/or the radio resource control message to the terminal device.

Optionally, the downlink control information includes at least one of the following: a dynamic adjustment field for a transmission periodicity of the first information, or an activation or deactivation indication field for the first information.

Optionally, the number of bits of the dynamic adjustment field for the transmission periodicity of the first information is related to a multiplexing pattern of synchronization signal block and control resource set #0.

Optionally, for multiplexing pattern 1 of SSB and CORESET#0, the number of bits of the dynamic adjustment field for the transmission periodicity of the first information in the downlink control information may be 2, and each codepoint corresponds to a value in the set L = {0, 1, 2} respectively.

Optionally, for multiplexing pattern 2 or 3 of SSB and CORESET#0, the number of bits of the dynamic adjustment field for the transmission periodicity of the first information in the downlink control information may be 4, and each codepoint corresponds to a value in the set L = {-5, -4, -3, -2, -1, 0, 1, 2, 3, 4, 5} respectively.

Optionally, the activation or deactivation indication field for the first information is used to indicate whether the base station performs transmission of the first information at one or more occasions within repetition periods of the first information.

Optionally, the method further includes at least one of the following:
within the second preset time period, the transmission mode is transmitting the first information with the regular periodicity;
within the second preset time period, the transmission mode is not transmitting the first information;
within the first preset time period and/or the second preset time period, the transmission mode is transmitting the on demand first information;
within the first preset time period and/or the second preset time period, the transmission mode is transmitting the first information with the dynamically adjusted periodicity;
within the first preset time period, the first information is not transmitted.

Optionally, by taking an example in which the first information is SIB1, the terminal device is UE, and the network device is a base station, the above transmission modes are described as follows.

Optionally, for transmitting the first information with the regular periodicity:
in an implementation, if the UE is in an RRC_INACTIVE state and an RRC_IDLE state:
within the second preset time period, the base station adopts the transmission mode of transmitting the first information with the regular periodicity for SIB1 transmission; and within the first preset time period, the base station adopts the transmission mode of transmitting the on demand first information to perform transmission of the SIB1. Specifically, within the inactive time of cell DTX, the base station transmits the SIB1 at a transmission occasion satisfying a first preset rule only after receiving an uplink wake-up signal from the terminal device; while within the active time of cell DTX, the base station transmits the SIB1 according to a legacy SIB1 repetition period.

Optionally, a legacy SIB1 periodicity is 160ms.

Optionally, for the multiplexing pattern 1 of SSB and CORESET#0, within 160ms, the legacy SIB1 repetition period is 20ms.

Optionally, for the multiplexing pattern 2 or 3 of SSB and CORESET#0, within 160ms, the legacy SIB1 repetition period is the same as a periodicity of an SSB associated with the SIB1.

If the UE is in an RRC_CONNECTED state:
within the second preset time period, the base station adopts the transmission mode of transmitting the first information with the regular periodicity for SIB1 transmission; and within the first preset time period, the base station adopts the transmission mode of transmitting the on demand first information to perform transmission of the SIB1. Specifically, within the inactive time of cell DTX, the base station transmits the SIB1 at a transmission occasion satisfying a first preset rule only after receiving an uplink wake-up signal; while within the active time of cell DTX, the base station transmits the SIB1 according to a legacy SIB1 repetition period.

Optionally, if SIB1 transmission is not to be performed in a certain SIB1 repetition period, DCI for scheduling this SIB1 does not need to be transmitted to the terminal. Specifically, if SIB1 transmission is required in a certain SIB1 repetition period, the base station needs to transmit DCI for scheduling this SIB1 to the terminal before the SIB1 transmission; while if SIB1 transmission is not to be performed in a certain SIB1 repetition period, the base station does not need to transmit DCI corresponding to this SIB1 to the terminal.

In another implementation, if the UE is in the RRC_INACTIVE state and the RRC_IDLE state:
within both the first preset time period and the second preset time period, the base station adopts the transmission mode of transmitting the on demand first information to perform transmission of the SIB1. Specifically, within both the active time and the inactive time of cell DTX, the base station transmits the SIB1 at a transmission occasion satisfying a first preset rule only after receiving an uplink wake-up signal.

Similarly, if the UE is in the RRC_CONNECTED state:
within both the first preset time period and the second preset time period, the base station adopts the transmission mode of transmitting the on demand first information to perform transmission of the SIB1. Specifically, within both the active time and the inactive time of cell DTX, the base station transmits the SIB1 at a transmission occasion satisfying a first preset rule only after receiving an uplink wake-up signal.

Optionally, for not transmitting the first information (such as no SIB1 transmission):
if the UE is in the RRC_INACTIVE state and the RRC_IDLE state:
within the second preset time period, the base station adopts the transmission mode of not transmitting the first information for SIB1 transmission; while within the first preset time period, the base station does not transmit SIB1 at any occasion of the SIB1 repetition period. Specifically, within the active time of cell DTX, the base station transmits DCI format 1_0 including a newly added activation or deactivation indication field for the first information to the terminal, to indicate whether the network device transmits SIB1 in a corresponding SIB1 repetition period. If the number of the activation or deactivation indication fields for the first information in the DCI format 1_0 is 1, a bit of 1 represents that there is SIB1 transmission at an occasion of the current SIB1 repetition period, and a bit of 0 represents that there is no SIB1 transmission at an occasion of the current SIB1 repetition period.

If the UE is in the RRC_CONNECTED state:
within the second preset time period, the base station adopts the transmission mode of not transmitting the first information for SIB1 transmission; while within the first preset time period, the base station does not transmit SIB1 at any occasion of the SIB1 repetition period.

Optionally, if the UE is in the RRC_INACTIVE state, the RRC_IDLE state, or the RRC_CONNECTED state, within both the first preset time period and the second preset time period, the base station may adopt the transmission mode of not transmitting the first information for SIB1 transmission.

Optionally, if the UE is in the RRC_INACTIVE state, the RRC_IDLE state, or the RRC_CONNECTED state, within the second preset time period, the base station adopts the transmission mode of transmitting the first information with the regular periodicity for SIB1 transmission; while within the first preset time period, the base station adopts the transmission mode of not transmitting the first information for SIB1 transmission.

Optionally, for the RRC_CONNECTED state, besides transmitting the DCI including the newly added activation or deactivation indication field for the first information to the terminal to indicate whether the network device transmits SIB1 in the corresponding SIB1 repetition period, the base station may also transmit an RRC message including an newly added activation or deactivation indication field for the first information to the terminal to indicate whether the network device transmits SIB1 in the corresponding SIB1 repetition period.

Optionally, for transmitting the SIB1 with a dynamically adjusted periodicity:
in an implementation, if the UE is in the RRC_INACTIVE state and the RRC_IDLE state:
within both the first preset time period and the second preset time period, the base station adopts the transmission mode of transmitting the first information with the dynamically adjusted periodicity for SIB1 transmission. Specifically, within the active time of cell DTX and the inactive time of cell DTX, the base station transmits DCI format 1_0 including a newly added dynamic adjustment field for the transmission periodicity of the first information to the terminal, to indicate a repetition period of subsequent SIB1 transmission by the network device.

Optionally, the number of bits of the dynamic adjustment field for the transmission periodicity of the first information in the DCI format 1_0 is related to the multiplexing pattern of SSB and CORESET#0.

Optionally, for the multiplexing pattern 1 of SSB and CORESET#0, the number of bits of the dynamic adjustment field for the transmission periodicity of the first information in the DCI format 1_0 may be 2, and each codepoint corresponds to a value in the set L = {0, 1, 2}. For example, bits of '00 correspond to the value 0 in the set, which means the SIB1 repetition period is adjusted to H=20ms*2^0; '01 correspond to the value 1 in the set, which means the SIB1 repetition period is adjusted to H=20ms*2^1; '10 correspond to the value 2 in the set, which means the SIB1 repetition period is adjusted to H=20ms*2^2, and so on.

Optionally, for the multiplexing pattern 2 or 3 of SSB and CORESET#0, the number of indication bits of the dynamic adjustment field for the transmission periodicity of the first information in the DCI format 1_0 may be 4, and each codepoint corresponds to a value in the set L = {-5, -4, -3, -2, -1, 0, 1, 2, 3, 4, 5}. For example, bits of '00 correspond to the value -5 in the set, which means the SIB1 repetition period is adjusted to H = SSB_periodicity*2^(-5); '01 correspond to the value -4 in the set, which means the SIB1 repetition period is adjusted to H = SSB_periodicity*2^(-4), and so on.

Optionally, for the multiplexing pattern 2 or 3 of SSB and CORESET#0, an adjusted SIB1 repetition period H is not less than 5ms and not greater than 160ms. If a value obtained after multiplying the SSB periodicity by 2^L1 is less than 5ms, the adjusted SIB1 repetition period is set to 5ms. Similarly, if the value obtained after multiplying the SSB periodicity by 2^L1 is greater than 160ms, the adjusted SIB1 repetition period is set to 160ms, where L1 is any value in the set L.

If the UE is in the RRC_CONNECTED state:
within both the first preset time period and the second preset time period, the base station adopts the transmission mode of transmitting the first information with the dynamically adjusted periodicity for SIB1 transmission. Specifically, within the active time of cell DTX and the inactive time of cell DTX, the base station dynamically indicates the adjusted SIB1 repetition period to the UE through an RRC message or the DCI format 1_0.

Optionally, the adjusted SIB1 repetition period may be directly indicated in the RRC message. For example, the RRC message directly indicates that the SIB1 repetition period is adjusted to 5ms, 160ms, etc.

Optionally, the adjusted SIB1 repetition period may also be indicated in the RRC message as a multiple of the current SIB1 repetition period. For example, it is configured in the RRC message that the SIB1 repetition period is adjusted to M times or 2^N times the current SIB1 repetition period, etc., where M and N are positive integers.

Optionally, an adjustment of the SIB1 repetition period in the downlink control information may also be M times or 2^N times the current SIB1 repetition period.

In the following, an example is provided in which the SIB1 repetition period is adjusted to 2^N times the current SIB1 repetition period in the downlink control information.

Optionally, the number of bits of the dynamic adjustment field for the transmission periodicity of the first information in the DCI format 1_0 is related to the multiplexing pattern of SSB and CORESET#0.

Optionally, for the multiplexing pattern 1 of SSB and CORESET#0, the number of bits of the dynamic adjustment field for the transmission periodicity of the first information in the DCI format 1_0 may be 2, and each codepoint corresponds to a value in the set L = {0, 1, 2}. For example, bits of '00 correspond to the value 0 in the set, which means the SIB1 repetition period is adjusted to H=20ms*2^0; '01 correspond to the value 1 in the set, which means the SIB1 repetition period is adjusted to H=20ms*2^1; '10' correspond to the value 2 in the set, which means the SIB1 repetition period is adjusted to H=20ms*2^2, and so on.

Optionally, for the multiplexing pattern 2 or 3 of SSB and CORESET#0, the number of bits of the dynamic adjustment field for the transmission periodicity of the first information in the DCI format 1_0 may be 4, and each codepoint corresponds to a value in the set L = {-5, -4, -3, -2, -1, 0, 1, 2, 3, 4, 5}. For example, bits of '00 correspond to the value -5 in the set, which means the SIB1 repetition period is adjusted to H = SSB_periodicity*2^(-5); '01 correspond to the value -4 in the set, which means the SIB1 repetition period is adjusted to H = SSB_periodicity*2^(-4), and so on.

Optionally, for the multiplexing pattern 2 or 3 of SSB and CORESET#0, a legacy SIB1 repetition period H is not less than 5ms and not greater than 160ms. If a value obtained after multiplying the SSB periodicity by 2^L1 is less than 5ms, the SIB1 repetition period is set to 5ms. Similarly, if the value obtained after multiplying the SSB periodicity by 2^L1 is greater than 160ms, the SIB1 repetition period is set to 160ms, where L1 is any value in the set L.

In another implementation, if the UE is in the RRC_INACTIVE state, the RRC_IDLE state, or the RRC_CONNECTED state:
within the second preset time period, the base station adopts the transmission mode of transmitting the first information with the dynamically adjusted periodicity for SIB1 transmission; while within the first preset time period, the base station does not transmit SIB1 at any occasion of the SIB1 repetition period.

Optionally, if the UE is in the RRC_INACTIVE state, the RRC_IDLE state, or the RRC_CONNECTED state, within the second preset time period, the base station adopts the transmission mode of transmitting the first information with the dynamically adjusted periodicity for SIB1 transmission; while within the first preset time period, the base station adopts the transmission mode of not transmitting the first information for SIB1 transmission.

Optionally, if the UE is in the RRC_INACTIVE state, the RRC_IDLE state, or the RRC_CONNECTED state, within the first preset time period, the base station adopts the transmission mode of transmitting the first information with the dynamically adjusted periodicity for SIB1 transmission; while within the second preset time period, the base station adopts the transmission mode of transmitting the first information with the regular periodicity for SIB1 transmission.

Optionally, if the UE is in the RRC_INACTIVE state, the RRC_IDLE state, or the RRC_CONNECTED state, within the second preset time period, the base station adopts the transmission mode of transmitting the first information with the dynamically adjusted periodicity for SIB1 transmission; while within the first preset time period, the base station adopts the transmission mode of not transmitting the first information for SIB1 transmission.

Optionally, if the UE is in the RRC_INACTIVE state, the RRC_IDLE state, or the RRC_CONNECTED state, within the first preset time period, the base station adopts the transmission mode of transmitting the first information with the dynamically adjusted periodicity for SIB1 transmission; while within the second preset time period, the base station adopts the transmission mode of not transmitting the first information for SIB1 transmission.

Optionally, the above RRC states and respective transmission modes of the first information may be combined arbitrarily.

Optionally, the DCI format 1_0 further includes at least one of the following:
a frequency domain resource allocation field, occupying $\left⌈{log}_{2}\left({N}_{RB}^{DL , BWP}\left({N}_{RB}^{DL , BWP}+1\right)/2\right)\right⌉$ bits, where ${N}_{RB}^{DL , BWP}$ is based on the size of CORESET#0;
a time domain resource allocation field, occupying 4 bits;
a virtual-resource-block to physical-resource-block mapping field, occupying 1 bit;
a modulation and coding scheme field, occupying 5 bits;
a redundancy version field, occupying 2 bits;
a system information indicator field, occupying 1 bit.

Optionally, if the terminal device is aware that the network does not transmit SIB 1 within a given SIB 1 repetition period, the UE is not required to decode the DCI corresponding to that repetition period for SIB1 scheduling.

In the technical solution of this embodiment, the network device transmits the first information in the transmission mode determined based on the second information. In a multi-carrier scenario, the number of transmissions of the first information can be effectively reduced, thereby reducing network energy consumption and/or operation cost.

### Second embodiment

Based on the above embodiment, the second embodiment of the present application provides a transmission method. In this embodiment, a detailed description is mainly provided for an uplink wake-up signal which triggers SIB 1 transmission.

Optionally, the network device transmits first information in a transmission mode determined based on at least one of a radio resource control state, a first preset time period, or a second preset time period.

Optionally, if the transmission mode determined by the network device based on at least one of the radio resource control state, the first preset time period, or the second preset time period is transmitting the on demand first information.

Optionally, the transmitting the on demand first information includes: in response to receiving an uplink wake-up signal, the network device transmits the first information at a transmission occasion satisfying a first preset rule.

Optionally, the uplink wake-up signal is transmitted by a terminal device according to an actual service requirement. Further, transmission of the first information is triggered by the uplink wake-up signal, so the number of transmissions of the first information can be effectively reduced, thereby reducing network energy consumption.

Optionally, the uplink wake-up signal includes at least one of the following:
the uplink wake-up signal is a periodic signal;
the uplink wake-up signal may be a pseudo-random sequence related to at least one of a radio frame number, a slot number, or a cell identity;
the uplink wake-up signal may also be a fixed random access preamble sequence, that is, it may be a reserved preamble in a random access preamble sequence set. For example, among 64 preambles for contention-based random access, one or more preambles may be reserved for use as the uplink wake-up signal (WUS)(WUS). Alternatively, an index of a preamble sequence used as the uplink wake-up signal may also be directly specified.

Optionally, the uplink wake-up signal is received on a non-anchor carrier.

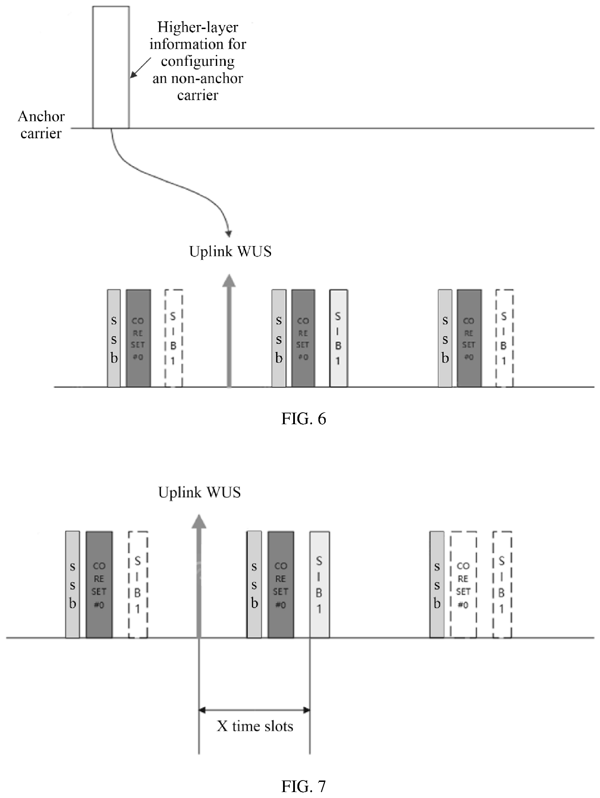

Optionally, a reception occasion and/or frequency domain position of the uplink wake-up signal are determined from higher layer information on an anchor carrier associated with the non-anchor carrier, as shown in FIG. 6.

Optionally, the time domain position of the uplink wake-up signal may include at least one of the following:
if the uplink wake-up signal is a preamble used for random access, a transmission occasion of the uplink wake-up signal is the same as a transmission occasion of Msg1;
if the uplink wake-up signal is a newly defined pseudo-random sequence, a transmission occasion of the uplink wake-up signal may be a valid uplink symbol with an offset of no less than X slots before the nearest occasion for receiving the first information after the uplink wake-up signal, where X is a positive integer, as shown in FIG. 7.

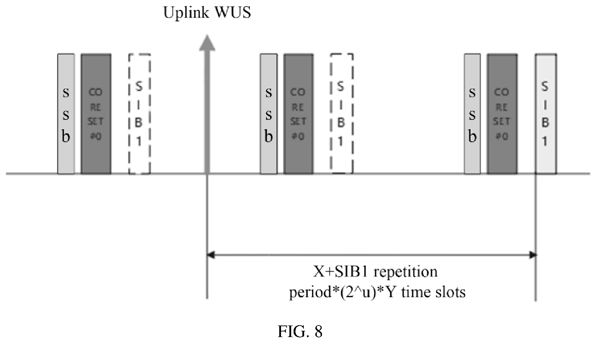

If the uplink wake-up signal is a newly defined pseudo-random sequence, a transmission occasion of the uplink wake-up signal may be a valid uplink symbol with an offset of no less than Z slots before the Y-th nearest occasion of the first information to be received after the uplink wake-up signal, where both Y and Z are positive integers. Specifically, taking the first information being SIB1 as an example, transmission is in the valid uplink symbol with the offset Z=X+SIB1 repetition period(ms)*(2^u)*Y slots, as shown in FIG. 8, where u is a subcarrier spacing of SIB1.

Optionally, for the value of u, reference can be made to Table 1 below:

| u | Subcarrier spacing (KHz) |
|---|---|
| 0 | 15 |
| 1 | 30 |
| 2 | 60 |
| 3 | 120 |
| 4 | 240 |
| 5 | 480 |
| 6 | 960 |

Optionally, a symbol in a slot for which a sufficient number of consecutive uplink symbols are available for transmission of the uplink wake-up signal.

Optionally, for the frequency domain position of the uplink wake-up signal, a bandwidth occupied by the uplink wake-up signal is the same as a bandwidth of CORESET#0.

Optionally, the first preset time period is inactive time of cell discontinuous transmission.

Optionally, the second preset time period is active time of cell discontinuous transmission.

Optionally, configurations of cell DTX and cell DRX on the non-anchor carrier are determined from the higher layer information on the anchor carrier.

Optionally, the higher layer information may include at least one of the following: a system information, a medium access control (Medium Access Control, MAC) message, and/or an RRC message.

Optionally, in a network energy-saving scenario, the anchor carrier is a carrier that can be used for transmission of SSB, system information, paging, and random access.

Optionally, in a network energy-saving scenario, the non-anchor carrier is a carrier that can be used for on-demand transmission of system information, no transmission of the system information, or transmission of the system information at a dynamically adjusted periodicity.

Optionally, the non-anchor carrier may also support paging and/or random access transmission.

Optionally, a frequency of the non-anchor carrier is determined from the higher layer information on the anchor carrier.

Optionally, the non-anchor carrier and the anchor carrier may be inter-band and co-located carriers.

Optionally, the non-anchor carrier and the anchor carrier may be inter-band and non-co-located carriers.

Optionally, the non-anchor carrier and the anchor carrier may be intra-band carriers.

Optionally, if the terminal device is aware that the network does not transmit SIB1 within a given SIB1 repetition period, the UE is not required to decode the DCI corresponding to that repetition period for SIB1 scheduling.

In the technical solution of this embodiment, the network device determines based on the second information to transmit the first information in the transmission mode of transmitting the on demand first information. Specifically, the base station transmits the first information only after receiving the uplink wake-up signal, so the number of transmissions of the first information can be effectively reduced, thereby reducing network energy consumption and/or operation cost.

### Third embodiment

Based on any of the above embodiments, the third embodiment of the present application provides a transmission method, in which a terminal device transmits an uplink wake-up signal to a network device to trigger the network device to transmit first information in a transmission mode of transmitting the on demand first information.

Optionally, in response to receiving the uplink wake-up signal, the network device transmits the first information at a transmission occasion satisfying a first preset rule.

Optionally, the satisfying the first preset rule includes at least one of:
the transmission occasion being located no less than X slots after a slot in which the uplink wake-up signal is transmitted, where X is a positive integer;
the position of no less than X slots after the uplink wake-up signal overlapping with a slot in which the nearest retransmission occasion of the first information after the uplink wake-up signal is located;
the transmission occasion being located no less than Z slots after the slot in which the uplink wake-up signal is transmitted, where Z is a positive integer;
the position of no less than Z slots after the uplink wake-up signal overlapping with a slot in which the Y-th nearest retransmission occasion of the first information after the uplink wake-up signal is located, where both Z and Y are positive integers.

Optionally, the transmission mode of transmitting the on demand first information may be located within a first preset time period and/or a second preset time period.

Optionally, the first preset time period is inactive time of cell discontinuous transmission.

Optionally, the second preset time period is active time of cell discontinuous transmission.

Optionally, an example in which the first information is SIB1 and the network device is a base station is provided as follows.

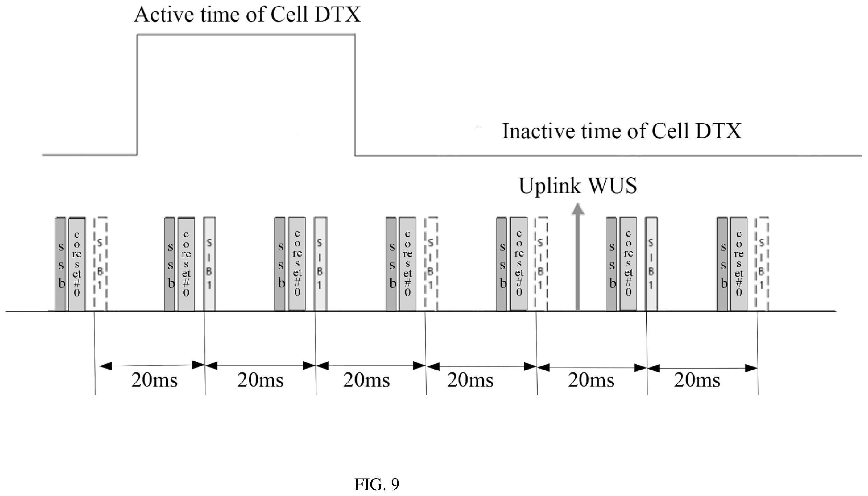

Assuming that the transmission mode of transmitting the on demand first information is located only within the first preset time period, within the active time of cell DTX, the base station adopts the transmission mode of transmitting the first information with the regular periodicity to transmit the SIB1, while within the inactive time of cell DTX, the base station changes the transmission mode of the SIB1 from transmitting the first information with the regular periodicity to transmitting the on demand first information. Assuming that a multiplexing pattern of SSB and CORESET#0 is 1, and a total duration of the periodicity of cell DTX is 320ms (including the active time of cell DTX of 60ms and the inactive time of cell DTX of 260ms), as shown in FIG. 9, within the inactive time (260ms) of cell DTX, the base station only performs SIB1 transmission when receiving an uplink wake-up signal for triggering SIB1 transmission from the terminal device. While within the active time of cell DTX, the base station performs SIB1 transmission according to a legacy SIB1 repetition period of 20ms.

Optionally, in the above embodiment, the terminal device is in an RRC_INACTIVE state, an RRC_IDLE state, or an RRC_CONNECTED state. Through the SIB1 transmission method in this embodiment, the terminal device can quickly acquire the SIB1 within the active time of cell DTX, and the number of times of SIB1 transmission by the base station within the inactive time of cell DTX can be effectively reduced, thereby saving network power consumption.

Optionally, if multiplexing pattern 2 or 3 of SSB and CORESET#0 is used, within the active time of cell DTX, the repetition period of the SIB1 transmitted by the base station in the above embodiment is adjusted from 20ms to a transmission periodicity of an SSB corresponding to the SIB1. Specifically, taking the transmission periodicity of the SSB being 5ms as an example, in the above embodiment, the base station performs the SIB1 transmission within the active time of cell DTX according to an SIB1 repetition period of 5ms.

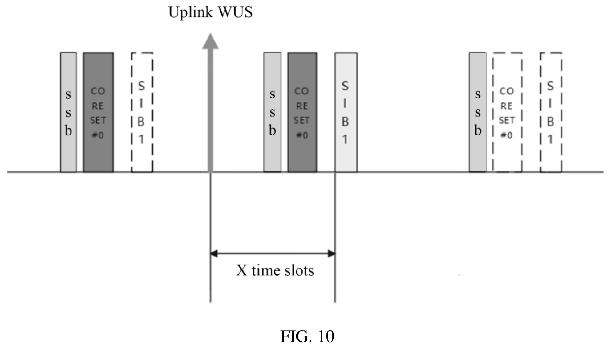

Optionally, a transmission occasion of the first information may be at a position of no less than X slots after the uplink wake-up signal, and the position of no less than X slots after the uplink wake-up signal overlaps with a slot in which the nearest retransmission occasion of the first information after the uplink wake-up signal is located. Specifically, taking the first information being SIB1 as an example, assuming that the multiplexing pattern of SSB and CORESET#0 is 1, and a position of X slots after the uplink wake-up signal exactly overlaps with a slot where the nearest SIB1 retransmission occasion is located, the base station performs SIB1 transmission at a position of the X-th slot after receiving the uplink wake-up signal. The schematic diagram is shown in FIG. 10.

Optionally, in the above embodiment, a duration of X slots is less than a duration of the SIB1 repetition period. As in the above embodiment, when the multiplexing pattern of SSB and CORESET#0 is 1 and a legacy SIB1 repetition period is 20ms, the duration of X slots is less than 20ms. Specifically, X=20*2^u slots, where u is a subcarrier spacing of SIB1.

Optionally, in the above embodiment, if the multiplexing pattern of SSB and CORESET#0 is 2 or 3, then X=SSB transmission periodicity *2^u slots, where u is a subcarrier spacing of SIB1.

Optionally, for the value of u, reference can be made to Table 1.

Optionally, if the terminal device is aware that the network does not transmit SIB1 within a given SIB1 repetition period, the UE is not required to decode the DCI corresponding to that repetition period for SIB1 scheduling. In the technical solution of this embodiment, the network device triggers the transmission of the first information within the first preset time period based on the received uplink wake-up signal, so the number of transmissions of the first information can be effectively reduced in a multi-carrier scenario, thereby reducing network energy consumption and/or operation cost.

### Fourth embodiment

Based on any of the above embodiments, the fourth embodiment of the present application provides a transmission method, in which a terminal device transmits an uplink wake-up signal to a network device to trigger the network device to transmit first information in a transmission mode of transmitting the on demand first information.

Optionally, in response to receiving the uplink wake-up signal, the network device transmits the first information at a transmission occasion satisfying a first preset rule.

Optionally, the satisfying the first preset rule includes at least one of:
the transmission occasion being located no less than X slots after a slot in which the uplink wake-up signal is transmitted, where X is a positive integer;
the position of no less than X slots after the uplink wake-up signal overlapping with a slot in which the nearest retransmission occasion of the first information after the uplink wake-up signal is located;
the transmission occasion being located no less than Z slots after the slot in which the uplink wake-up signal is transmitted, where Z is a positive integer;
the position of no less than Z slots after the uplink wake-up signal overlapping with a slot in which the Y-th nearest retransmission occasion of the first information after the uplink wake-up signal is located, where both Z and Y are positive integers.

Optionally, the transmission mode of transmitting the on demand first information may be located within a first preset time period and/or a second preset time period.

Optionally, the first preset time period is inactive time of cell discontinuous transmission.

Optionally, the second preset time period is active time of cell discontinuous transmission.

Optionally, an example in which the first information is SIB1 and the network device is a base station is provided as follows.

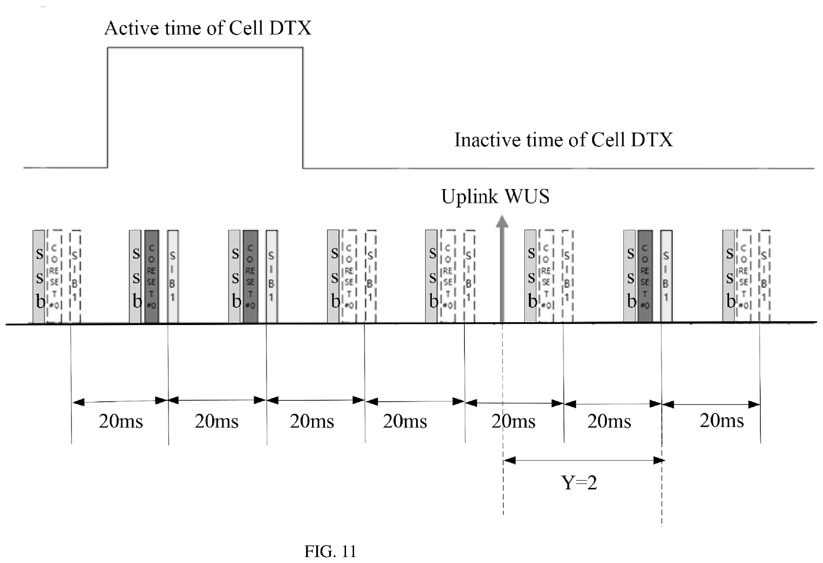

Assuming that the transmission mode of transmitting the on demand first information is located within the first preset time period, within the active time of cell DTX, the base station adopts the transmission mode of transmitting the first information with a regular periodicity to transmit the SIB1, while within the inactive time of cell DTX, the base station changes the transmission mode of the SIB1 from transmitting the first information with the regular periodicity to transmitting the on demand first information. Assuming that a multiplexing pattern of SSB and CORESET#0 is 1, and a total duration of the periodicity of cell DTX is 320ms (including the active time of cell DTX of 60ms and the inactive time of cell DTX of 260ms), as shown in FIG. 11, within the inactive time (260ms) of cell DTX, the base station only performs SIB1 transmission when receiving an uplink wake-up signal for triggering SIB1 transmission from the terminal device. While within the active time of cell DTX, the base station performs SIB1 transmission according to a legacy SIB1 repetition period of 20ms.

Optionally, in the above embodiment, the terminal device is in an RRC_INACTIVE state, an RRC_IDLE state, or an RRC_CONNECTED state. Through the SIB1 transmission method in this embodiment, the terminal device can quickly acquire the SIB1 within the active time of cell DTX, and the number of times of SIB1 transmission by the base station within the inactive time of cell DTX can be effectively reduced, thereby saving network power consumption.

Optionally, if multiplexing pattern 2 or 3 of SSB and CORESET#0 is used, within the active time of cell DTX, the repetition period of the SIB1 transmitted by the base station in the above embodiment is adjusted from 20ms to a transmission periodicity of an SSB corresponding to the SIB1. Specifically, taking the transmission periodicity of the SSB being 5ms as an example, in the above embodiment, the base station performs the SIB1 transmission within the active time of cell DTX according to an SIB1 repetition period of 5ms.

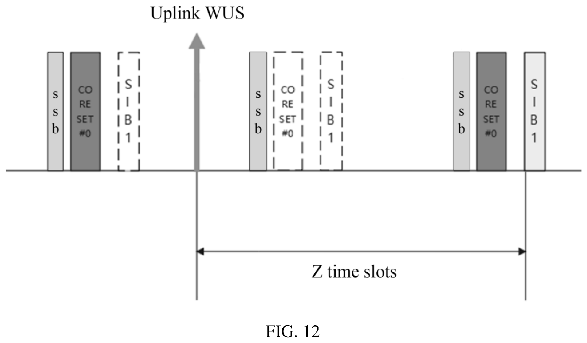

Optionally, a transmission occasion of the first information may be at a position of no less than Z slots after the uplink wake-up signal, and the position of no less than Z slots after the uplink wake-up signal overlaps with a slot in which the Y-th nearest retransmission occasion of the first information after the uplink wake-up signal is located. Specifically, taking the first information being SIB1 as an example, assuming that the multiplexing pattern of SSB and CORESET#0 is 1, and a position of Z slots after the uplink wake-up signal exactly overlaps with a slot where the Y-th nearest SIB1 retransmission occasion is located, the base station performs SIB1 transmission at a position of the Z-th slot after receiving the uplink wake-up signal. The schematic diagram is shown in FIG. 12.

Optionally, in the above embodiment, assuming that the multiplexing pattern of SSB and CORESET#0 is 1, the duration of Z slots equals to X+SIB1 repetition period*2^u*Y. Assuming Y=2 and u=0, Z=X+20ms*2^u*2=X+40 slots. The schematic diagram is shown in FIG. 11.

Optionally, in the above embodiment, a duration of X slots is less than a duration of the SIB1 repetition period. As in the above embodiment, when the multiplexing pattern of SSB and CORESET#0 is 1 and a legacy SIB1 repetition period is 20ms, the duration of X slots is less than 20ms. Specifically, X=20*2^u slots, where u is a subcarrier spacing of SIB1.

Optionally, in the above embodiment, if the multiplexing pattern of SSB and CORESET#0 is 2 or 3, then X=SSB transmission periodicity *2^u slots, where u is a subcarrier spacing of SIB1.

Optionally, for the value of u, reference can be made to Table 1.

Optionally, if the terminal device is aware that the network does not transmit SIB1 within a given SIB1 repetition period, the UE is not required to decode the DCI corresponding to that repetition period for SIB1 scheduling.

In the technical solution of this embodiment, the network device transmits the first information in the transmission mode determined based on the second information, where the terminal device transmits the uplink wake-up signal to the network device to trigger the network device to transmit the first information in the transmission mode of transmitting the on demand first information, so the number of transmissions of the first information can be effectively reduced in a multi-carrier scenario, thereby reducing network energy consumption and/or operation cost.

### Fifth embodiment

Based on any of the above embodiments, the fifth embodiment of the present application provides a transmission method, in which a terminal device transmits an uplink wake-up signal to a network device to trigger the network device to transmit first information in a transmission mode of transmitting the on demand first information.

Optionally, in response to receiving the uplink wake-up signal, the network device transmits the first information at a transmission occasion satisfying a first preset rule.

Optionally, the satisfying the first preset rule includes at least one of:
the transmission occasion being located no less than X slots after a slot in which the uplink wake-up signal is transmitted, where X is a positive integer;
the position of no less than X slots after the uplink wake-up signal overlapping with a slot in which the nearest retransmission occasion of the first information after the uplink wake-up signal is located;
the transmission occasion being located no less than Z slots after the slot in which the uplink wake-up signal is transmitted, where Z is a positive integer;
the position of no less than Z slots after the uplink wake-up signal overlapping with a slot in which the Y-th nearest retransmission occasion of the first information after the uplink wake-up signal is located, where both Z and Y are positive integers.

Optionally, the transmission mode of transmitting the on demand first information may be located within a first preset time period and/or a second preset time period.

Optionally, the first preset time period is inactive time of cell discontinuous transmission.

Optionally, the second preset time period is active time of cell discontinuous transmission.

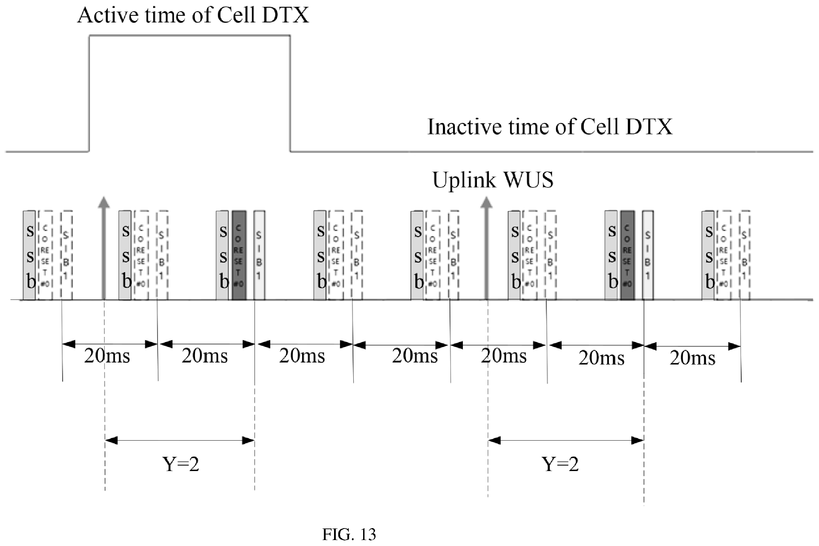

Optionally, taking the first information being SIB1 as an example, assuming that the transmission mode of transmitting the on demand first information is located within both the first preset time period and the second preset time period, that is, the base station changes the transmission mode of the SIB1 from transmitting the first information with a regular periodicity to transmitting the on demand first information throughout the entire cell DTX periodicity. Assuming that a multiplexing pattern of SSB and CORESET#0 is 1, a total duration of the periodicity of cell DTX is 320ms (including the active time of cell DTX of 60ms and the inactive time of cell DTX of 260ms), and Y=2, the base station only performs SIB1 transmission, within the periodicity of 320ms, at a position of an occasion of the Y-th (2^{nd}) nearest SIB1 repetition period after receiving the uplink wake-up signal transmitted by the terminal device, as shown in FIG. 13.

Optionally, in the above embodiment, the terminal device is in an RRC_INACTIVE state, an RRC_IDLE state, or an RRC_CONNECTED state.

Optionally, in the above embodiment, the base station may only perform SIB1 transmission, within the periodicity of 320ms, at a position of an occasion of the nearest SIB1 repetition period after receiving the uplink wake-up signal transmitted by the terminal device. That is, the schematic diagram of the transmission occasions of the uplink wake-up signal and the SIB1 is as shown in FIG. 10.

Optionally, if the terminal device is aware that the network does not transmit SIB1 within a given SIB1 repetition period, the UE is not required to decode the DCI corresponding to that repetition period for SIB1 scheduling.

Compared to the above third embodiment or fourth embodiment, the technical solution of this embodiment can further reduce the number of SIB1 transmissions by extending the transmission mode of transmitting the on demand first information to the entire cell DTX periodicity, thereby further reducing network energy consumption.

### Sixth embodiment

Based on any of the above embodiments, the sixth embodiment of the present application provides a transmission method, in which a network device indicates to a terminal device, through downlink control information and/or a radio resource control message, that the network device applies a transmission mode of not transmitting the first information.

Optionally, the network device indicates, by transmitting the downlink control information and/or the radio resource control message to the terminal device, whether the network device transmits the first information at a corresponding transmission occasion of the first information within a first preset time period and/or a second preset time period.

Optionally, the first preset time period is inactive time of cell discontinuous transmission.

Optionally, the second preset time period is active time of cell discontinuous transmission.

Optionally, an example in which the first information is SIB1 and the network device is a base station is provided as follows.

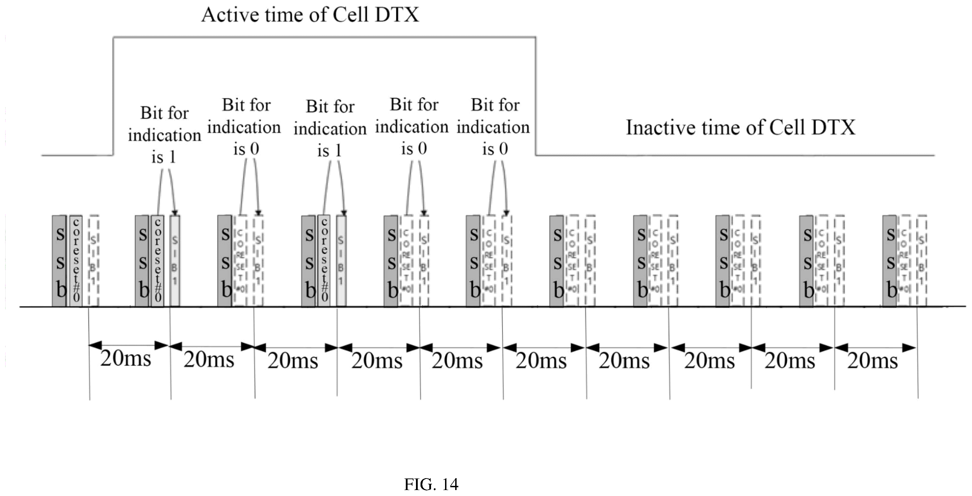

Assuming that the transmission mode of not transmitting the first information is located only within the second preset time period, within the active time of cell DTX, the base station changes the transmission mode of the SIB1 from the transmission mode of transmitting the first information with a regular periodicity to not transmitting the first information, while within the inactive time of cell DTX, the base station does not transmit SIB1 at any occasion of the SIB1 repetition period. Assuming that a multiplexing pattern of SSB and CORESET#0 is 1, and a total duration of the periodicity of cell DTX is 640ms (including the active time of cell DTX of 100ms and the inactive time of cell DTX of 540ms), as shown in FIG. 14, within the active time (100ms) of cell DTX, the base station indicates, by transmitting common DCI (such as DCI format 1_0) to the terminal device, whether the network device performs SIB1 transmission in the current SIB1 repetition period.

Optionally, assuming that the common DCI is the DCI format 1_0, an activation or deactivation indication field for the first information is used to indicate whether the base station performs transmission of the first information at one occasion of a repetition period of the first information. Specifically, a 1-bit activation or deactivation indication field for the first information may be added into the DCI format 1_0, where a bit of 0 indicates that the SIB1 does not need to be transmitted in the current SIB1 repetition period, and a bit of 1 indicates that the SIB1 needs to be transmitted in the current SIB1 repetition period.

Optionally, in the above embodiment, the terminal device is in an RRC_INACTIVE state, an RRC_IDLE state, or an RRC_CONNECTED state.

Optionally, if the above embodiment is in the RRC_CONNECTED state, the downlink control information (common DCI) in the above embodiment may be replaced by the RRC message.

Optionally, if the multiplexing pattern of SSB and CORESET#0 is 1, the SIB1 repetition period is 20ms; if the multiplexing pattern of SSB and CORESET#0 is 2 or 3, the SIB1 repetition period is the same as a transmission periodicity of an SSB corresponding to the SIB1. Specifically, taking the transmission periodicity of the SSB of 40ms as an example, the SIB1 repetition period is 40ms.

Optionally, the transmission mode of not transmitting the first information may be located only within the first preset time period, while within the second preset time period, the base station adopts the transmission mode of transmitting the first information with the regular periodicity to transmit the SIB1.

Optionally, the transmission mode of not transmitting the first information may be located both within the first preset time period and the second preset time period.

Optionally, the common DCI (such as DCI format 1_0) may further include at least one of the following:
a frequency domain resource allocation field, occupying $\left⌈{log}_{2}\left({N}_{RB}^{DL , BWP}\left({N}_{RB}^{DL , BWP}+1\right)/2\right)\right⌉$ bits, where ${N}_{RB}^{DL , BWP}$ is based on the size of CORESET#0;
a time domain resource allocation field, occupying 4 bits;
a virtual-resource-block to physical-resource-block mapping field, occupying 1 bit;
a modulation and coding scheme field, occupying 5 bits;
a redundancy version field, occupying 2 bits;
a system information indicator field, occupying 1 bit.

Optionally, if the terminal device is aware that the network does not transmit SIB1 within a given SIB1 repetition period, the UE is not required to decode the DCI corresponding to that repetition period for SIB1 scheduling.

In the technical solution of this embodiment, the network device transmits the first information in the transmission mode determined based on the second information, where the network device indicates to the terminal, through the downlink control information and/or the radio resource control message, that the network device transmits the first information in the transmission mode of not transmitting the first information, so the number of transmissions of the first information can be effectively reduced, thereby reducing network energy consumption and/or operation cost.

### Seventh embodiment

Based on any of the above embodiments, the seventh embodiment of the present application provides a transmission method, in which a network device indicates to a terminal device, through downlink control information and/or a radio resource control message, that the network device applies a transmission mode of not transmitting the first information.

Optionally, the network device indicates, by transmitting the downlink control information and/or the radio resource control message to the terminal device, whether the network device transmits the first information at a corresponding transmission occasion of the first information within a first preset time period.

Optionally, the first preset time period is inactive time of cell discontinuous transmission.

Optionally, an example in which the first information is SIB1 and the network device is a base station is provided as follow.

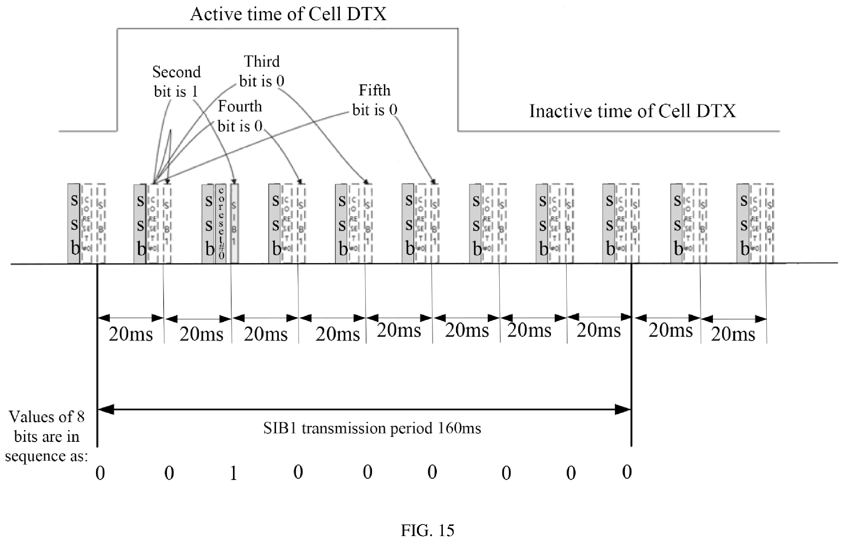

Assuming that the transmission mode of not transmitting the first information is located only within the second preset time period, within the active time of cell DTX, the base station changes the transmission mode of the SIB1 from the transmission mode of transmitting the first information with a regular periodicity to not transmitting the first information, while within the inactive time of cell DTX, the base station does not transmit SIB1 at any occasion of the SIB1 repetition period. Assuming that a multiplexing pattern of SSB and CORESET#0 is 1, and a total duration of the periodicity of cell DTX is 640ms (including the active time of cell DTX of 100ms and the inactive time of cell DTX of 540ms), as shown in FIG. 15, within the active time (100ms) of cell DTX, the base station indicates, by transmitting common DCI (such as DCI format 1_0) to the terminal, whether the network device performs SIB1 transmission in the current or upcoming N SIB1 repetition periods.

Optionally, assuming that the common DCI is the DCI format 1_0, an activation or deactivation indication field for the first information is used to indicate whether the base station performs transmission of the first information at occasions of multiple repetition periods of the first information. Specifically, an 8-bit activation or deactivation indication field for the first information may be added into the DCI format 1_0, where each bit corresponds to whether SIB1 needs to be transmitted at an occasion of each repetition period in the SIB1 transmission periodicity of 160ms. Specifically, the 8 bits indicate, from the most significant bit to the least significant bit, whether SIB1 needs to be transmitted at an occasion of the first repetition period, whether SIB1 needs to be transmitted at an occasion of the second repetition period, ..., whether SIB1 needs to be transmitted at an occasion of the eighth repetition period. For example, bits 0000 0000 represent that within the active time of cell DTX, there is no need to transmit SIB1 in any of the eight SIB1 repetition periods within the SIB1 transmission periodicity. Bits 1010 0101 represent that within the active time of cell DTX, SIB1 transmission is performed in the first, third, sixth, and eighth SIB1 repetition periods within the SIB1 transmission periodicity; while there is no need to perform SIB1 transmission in the second, fourth, fifth, and seventh repetition periods within the SIB1 transmission periodicity.

Optionally, if the active time of cell DTX only includes a portion of SIB1 repetition periods within the SIB1 transmission periodicity, only indication bits corresponding to the SIB1 repetition periods falling within the active time of cell DTX need to be extracted from the DCI format 1_0. For example, in the schematic diagram of FIG. 15, only the second to fifth bits for indicating the transmission of the SIB1 repetition periods in DCI format 1_0 need to be extracted.

Optionally, in the above embodiment, the terminal device is in an RRC_INACTIVE state, an RRC_IDLE state, or an RRC_CONNECTED state.

Optionally, if the above embodiment is in the RRC_CONNECTED state, the downlink control information (common DCI) in the above embodiment may be replaced by the RRC message.

Optionally, if the multiplexing pattern of SSB and CORESET#0 is 1, the SIB1 repetition period is 20ms; if the multiplexing pattern of SSB and CORESET#0 is 2 or 3, the SIB1 repetition period is the same as a transmission periodicity of an SSB corresponding to the SIB1. Specifically, taking the transmission periodicity of the SSB of 5ms as an example, the SIB1 repetition period is 5ms.

Optionally, the transmission mode of not transmitting the first information may be located only within the first preset time period, while within the second preset time period, the base station adopts the transmission mode of transmitting the first information with the regular periodicity to transmit the SIB1.

Optionally, the transmission mode of not transmitting the first information may be located both within the first preset time period and the second preset time period.

Optionally, if the terminal device is aware that the network does not transmit SIB1 within a given SIB1 repetition period, the UE is not required to decode the DCI corresponding to that repetition period for SIB1 scheduling.

In the technical solution of this embodiment, the network device transmits the first information in the transmission mode determined based on the second information, where the network device indicates to the terminal device, through the downlink control information and/or the radio resource control message, that the network device transmits the first information in the transmission mode of not transmitting the first information, so the number of transmissions of the first information can be effectively reduced in a multi-carrier scenario, thereby reducing network energy consumption and/or operation cost.

### Eighth embodiment

Based on any of the above embodiments, the eighth embodiment of the present application provides a transmission method, in which a network device indicates to a terminal device, through downlink control information and/or a radio resource control message, that the network device applies a transmission mode of transmitting the first information with a dynamically adjusted periodicity.

Optionally, the network device indicates, by transmitting the downlink control information and/or the radio resource control messages to the terminal device, whether the network device adopts the transmission mode of transmitting the first information with the dynamically adjusted periodicity within a first preset time period and/or a second preset time period.

Optionally, the first preset time period is inactive time of cell discontinuous transmission.

Optionally, the second preset time period is active time of cell discontinuous transmission.

Optionally, the network device may indicate a dynamically adjusted transmission periodicity of the first information through a dynamic adjustment field for a transmission periodicity of the first information in the downlink control information.

Optionally, the number of bits of the dynamic adjustment field for the transmission periodicity of the first information is related to a multiplexing pattern of synchronization signal block and control resource set #0.

Optionally, assuming that the multiplexing pattern of SSB and CORESET#0 is 1, the number of bits for indicating dynamic adjustment for the transmission periodicity of the first information in the downlink control information is 2, and each codepoint corresponds to a value in the set L = {0, 1, 2} respectively. For example, bits of '00' indicate that the SIB1 repetition period is adjusted to 20ms*2^0=20ms, i.e., no adjustment to the SIB1 repetition period; bits of '01' indicate that the SIB1 repetition period is adjusted to 20ms*2^1=40ms; bits of '10' indicate that the SIB1 repetition period is adjusted to 20ms*2^2=80ms, and so on.

Optionally, assuming that the multiplexing pattern of SSB and CORESET#0 is 2 or 3, the number of bits for indicating dynamic adjustment for the transmission periodicity of the first information in the downlink control information is 4, and each codepoint corresponds to the set L={-5, -4, -3, -2, -1, 0, 1, 2, 3, 4, 5} respectively. For example, bits of '0000' correspond to a value of -5, indicating that the SIB1 repetition period is adjusted to SSB_periodicity*2^(-5); bits of '0001' correspond to a value of -4, indicating that the SIB1 repetition period is adjusted to SSB_periodicity*2^(-4), and so on.

Optionally, for the multiplexing pattern 2 or 3 of SSB and CORESET # 0, the SIB1 repetition period calculated by the formula of SSB_periodicity*2^L1 is not less than 5ms and not greater than 160ms; where L1 is any value in the set L.

Optionally, an example in which the first information is SIB1 and the network device is a base station is provided as follows.

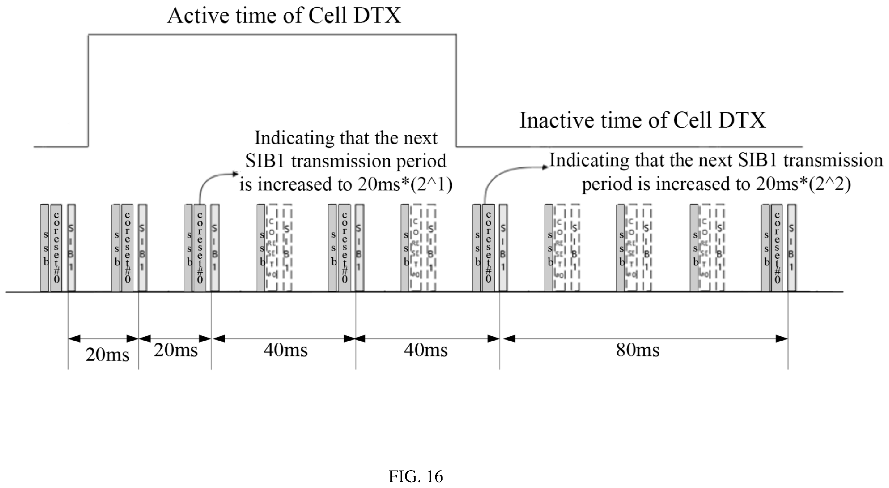

Assuming that the transmission mode of transmitting the first information with the dynamically adjusted periodicity is located within both the first preset time period and the second preset time period, within both the active time of cell DTX and inactive time of cell DTX, the base station changes the transmission mode of the SIB1 from the transmission mode of transmitting the first information with a regular periodicity to transmitting the first information with the dynamically adjusted periodicity. It is assumed that the multiplexing pattern of SSB and CORESET#0 is 1, and a total duration of the periodicity of cell DTX is 640ms (including the active time of cell DTX of 100ms and the inactive time of cell DTX of 540ms). If within the active time of cell DTX, the bits for indicating dynamic adjustment for the transmission periodicity of the first information in DCI format 1_0 is '01', the base station will perform SIB1 transmission according to a repetition period of 20ms*2^1=40ms within the active time of cell DTX, that is, the SIB1 transmission will be performed only 4 times within the SIB1 periodicity of 160ms. If within the inactive time of cell DTX, the bits for indicating dynamic adjustment for the transmission periodicity of the first information in DCI format 1_0 is '10', the base station will perform SIB1 transmission according to a repetition period of 20ms*2^2=80ms within the active time of cell DTX, that is, the SIB1 transmissions will be performed only twice within the SIB1 periodicity of 160ms, as shown in FIG. 16.

Optionally, in the above embodiment, the terminal device is in an RRC_INACTIVE state, an RRC_IDLE state, or an RRC_CONNECTED state.

Optionally, if the above embodiment is in the RRC_CONNECTED state, the downlink control information in the above embodiment may be replaced by the RRC message.

Optionally, the transmission mode of transmitting the first information with the dynamically adjusted periodicity may be located only within the second preset time period, while within the first preset time period, the base station does not transmit SIB1 at any occasion of the SIB1 repetition period.

Optionally, the transmission mode of transmitting the first information with the dynamically adjusted periodicity may be located only within the first preset time period, while within the second preset time period, the base station performs SIB1 transmission in the transmission mode of transmitting the first information with the regular periodicity.

In the technical solution of this embodiment, the network device transmits the first information in the transmission mode determined based on the second information, where the network device indicates to the terminal, through the downlink control information and/or the radio resource control message, that the network device transmits the first information in the transmission mode of transmitting the first information with the dynamically adjusted periodicity, so the number of transmissions of the first information can be effectively reduced in a multi-carrier scenario, thereby reducing network energy consumption and/or operation cost.

### Ninth embodiment

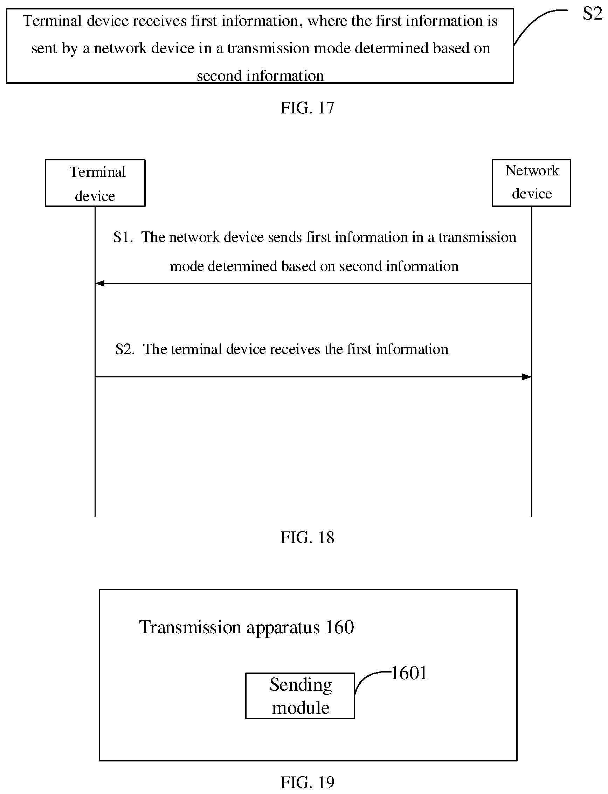

Refer to FIG. 17, which is a schematic flowchart of a transmission method according to the ninth embodiment of the present application. The transmission method of the embodiment of the present application may be applied to a terminal device (such as a mobile phone), including the following steps.

S2: the terminal device receives first information, where the first information is transmitted by a network device in a transmission mode determined based on second information.

Optionally, the second information includes at least one of the following: a radio resource control state, an active time of cell discontinuous transmission, or an inactive time of cell discontinuous transmission.

Optionally, the transmission mode includes at least one of the following: transmitting the on demand first information, not transmitting the first information, transmitting the first information with a regular periodicity, or transmitting the first information with a dynamically adjusted periodicity.

Optionally, the first information includes: system information block 1 and/or system information blocks other than the system information block 1.

Optionally, the transmission mode of the first information adopted by the network device is determined from at least one of the radio resource control state, the active time of cell discontinuous transmission, or the inactive time of cell discontinuous transmission.

Optionally, the system information blocks other than the system information block 1 may be system information such as SIB2 to SIB21.

Optionally, the system information blocks other than the system information block 1 may also be other newly added system information, such as those following SIB21.

Optionally, the solution of this embodiment may be applied to a low-load scenario, for example, a scenario where traffic load of a cell is relatively low or the number of terminal devices in the cell is relatively small.

Optionally, the solution of this embodiment may be applied to a multi-carrier scenario, for example, a multi-carrier scenario where CCs (Component Carriers, component carriers) are co-located or a multi-carrier scenario where CCs (Component Carriers, component carriers) are not co-located.

Optionally, the solution of this embodiment may also be applied to both a low-load scenario and a multi-carrier scenario simultaneously.

Periodic transmission of SIB1 messages may increase network energy consumption and operation cost in the low-load scenario and/or the multi-carrier scenario. For example, in the low-load scenario, there may be few or no terminal devices requiring to receive a system information. To address this issue, the network device transmits the first information in the transmission mode determined according to the second information, thereby restricting transmission of the first information, such as SIB1, so as to reduce network energy consumption and lower operation cost.

Optionally, the radio resource control state includes at least one of the following: an RRC_INACTIVE state, an RRC_IDLE state, or an RRC_CONNECTED state.

Optionally, the transmitting the on demand first information includes: in response to receiving an uplink wake-up signal, the network device transmits the first information at a transmission occasion satisfying a first preset rule.

Optionally, a reception occasion for receiving the first information by the terminal device includes at least one of:
a position of an occasion of a legacy repetition period of the first information;
a position of an occasion of a dynamically adjusted repetition period of the first information;
a position of an occasion of the nearest repetition period of the first information after an uplink wake-up signal;
a position of an occasion of the Y-th repetition period of the first information after the uplink wake-up signal, where Y is a positive integer.

Optionally, the terminal device transmits the uplink wake-up signal according to an actual service requirement. Further, transmission of the first information is triggered through the uplink wake-up signal, so the number of transmissions of the first information can be effectively reduced, thereby reducing network energy consumption.

Optionally, the satisfying the first preset rule includes at least one of the following:
the transmission occasion being located no less than X slots after a slot in which the uplink wake-up signal is transmitted, where X is a positive integer;
the position of no less than X slots after the uplink wake-up signal overlapping with a slot in which the nearest retransmission occasion of the first information after the uplink wake-up signal is located;
the transmission occasion being located no less than Z slots after the slot in which the uplink wake-up signal is transmitted, where Z is a positive integer;
the position of no less than Z slots after the uplink wake-up signal overlapping with a slot in which the Y-th nearest retransmission occasion of the first information after the uplink wake-up signal is located, where both Z and Y are positive integers.

Optionally, a value of X is less than a repetition period of the first information.

Optionally, the not transmitting the first information includes: indicating, by transmitting downlink control information and/or a radio resource control message from the network device to the terminal device, whether the network device transmits the first information at a corresponding transmission occasion of the first information within a first preset time period.

Optionally, the first preset time period is the inactive time of cell discontinuous transmission.

Optionally, the transmitting the first information with the regular periodicity includes: transmitting, by the network device, the first information at respective transmission occasions of the first information within a second preset time period.

Optionally, the second preset time period is the active time of cell discontinuous transmission.

Optionally, the transmitting the first information with the dynamically adjusted periodicity is: dynamically adjusting, by the network device, a retransmission occasion of the first information by transmitting the downlink control information and/or the radio resource control message to the terminal device.

Optionally, the downlink control information includes at least one of the following: a dynamic adjustment field for a transmission periodicity of the first information, or an activation or deactivation indication field for the first information.

Optionally, the number of bits of the dynamic adjustment field for the transmission periodicity of the first information is related to a multiplexing pattern of synchronization signal block and control resource set #0.

Optionally, for multiplexing pattern 1 of SSB and CORESET#0, the number of bits of the dynamic adjustment field for the transmission periodicity of the first information in the downlink control information may be 2, and each codepoint corresponds to a value in the set L = {0, 1, 2} respectively.

Optionally, for multiplexing pattern 2 or 3 of SSB and CORESET#0, the number of bits of the dynamic adjustment field for the transmission periodicity of the first information in the downlink control information may be 4, and each codepoint corresponds to a value in the set L = {-5, -4, -3, -2, -1, 0, 1, 2, 3, 4, 5} respectively.

Optionally, the activation or deactivation indication field for the first information is used to indicate whether the base station performs transmission of the first information at one or more occasions within repetition periods of the first information.

Optionally, the activation or deactivation indication field for the first information is used to indicate whether the base station performs transmission of the first information at one or more occasions within repetition periods of the first information.

Optionally, the method further includes at least one of the following:
within the second preset time period, the transmission mode is transmitting the first information with the regular periodicity;
within the second preset time period, the transmission mode is not transmitting the first information;
within the first preset time period and/or the second preset time period, the transmission mode is transmitting the on demand first information;
within the first preset time period and/or the second preset time period, the transmission mode is transmitting the first information with the dynamically adjusted periodicity;
within the first preset time period, the first information is not received.

Optionally, by taking an example in which the first information is SIB1, the terminal device is UE, and the network device is a base station, the above transmission modes are described as follows.

Optionally, for transmitting the first information with the regular periodicity:
in an implementation, if the UE is in an RRC_INACTIVE state and an RRC_IDLE state:
within the second preset time period, the base station adopts the transmission mode of transmitting the first information with the regular periodicity for SIB1 transmission; and within the first preset time period, the base station adopts the transmission mode of transmitting the on demand first information to perform transmission of the SIB1. Specifically, within the inactive time of cell DTX, the base station transmits the SIB1 at a transmission occasion satisfying a first preset rule only after receiving an uplink wake-up signal; while within the active time of cell DTX, the base station transmits the SIB1 according to a legacy SIB1 repetition period.

Optionally, a legacy SIB1 periodicity is 160ms.

Optionally, for the multiplexing pattern 1 of SSB and CORESET#0, within 160ms, the legacy SIB1 repetition period is 20ms_{∘}

Optionally, for the multiplexing pattern 2 or 3 of SSB and CORESET#0, within 160ms, the legacy SIB1 repetition period is the same as a periodicity of an SSB associated with the SIB1.

If the UE is in an RRC_CONNECTED state:
within the second preset time period, the base station adopts the transmission mode of transmitting the first information with the regular periodicity for SIB1 transmission; and within the first preset time period, the base station adopts the transmission mode of transmitting the on demand first information to perform transmission of the SIB1. Specifically, within the inactive time of cell DTX, the base station transmits the SIB1 at a transmission occasion satisfying a first preset rule only after receiving an uplink wake-up signal; while within the active time of cell DTX, the base station transmits the SIB1 according to a legacy SIB1 repetition period.

Optionally, if SIB1 transmission is not to be performed in a certain SIB1 repetition period, DCI for scheduling this SIB1 does not need to be transmitted to the terminal. Specifically, if SIB1 transmission is required in a certain SIB1 repetition period, the base station needs to transmit DCI for scheduling this SIB1 to the terminal before the SIB1 transmission; while if SIB1 transmission is not to be performed in a certain SIB1 repetition period, the base station does not need to transmit DCI corresponding to this SIB1 to the terminal.

In another implementation, if the UE is in the RRC_INACTIVE state and the RRC_IDLE state:
within both the first preset time period and the second preset time period, the base station adopts the transmission mode of transmitting the on demand first information to perform transmission of the SIB1. Specifically, within both the active time and the inactive time of cell DTX, the base station transmits the SIB1 at a transmission occasion satisfying a first preset rule only after receiving an uplink wake-up signal.

Similarly, if the UE is in the RRC_CONNECTED state:
within both the first preset time period and the second preset time period, the base station adopts the transmission mode of transmitting the on demand first information to perform transmission of the SIB1. Specifically, within both the active time and the inactive time of cell DTX, the base station transmits the SIB1 at a transmission occasion satisfying a first preset rule only after receiving an uplink wake-up signal.

Optionally, in the above two implementations, for the RRC states, the above behavior restrictions may be combined arbitrarily.

Optionally, for not transmitting the first information (such as no SIB1 transmission):
if the UE is in the RRC_INACTIVE state and the RRC_IDLE state:
within the second preset time period, the base station adopts the transmission mode of not transmitting the first information for SIB1 transmission; while within the first preset time period, the base station does not transmit SIB1 at any occasion of the SIB1 repetition period. Specifically, within the active time of cell DTX, the base station transmits DCI format 1_0 including a newly added activation or deactivation indication field for the first information to the terminal, to indicate whether the network device transmits SIB1 in a corresponding SIB1 repetition period. Assuming that the number of the activation or deactivation indication fields for the first information in the DCI format 1_0 is 1, a bit of 1 represents that there is SIB1 transmission at an occasion of the current SIB1 repetition period, and a bit of 0 represents that there is no SIB1 transmission at an occasion of the current SIB1 repetition period. Within the inactive time of cell DTX, the base station does not transmit SIB1 at any occasion of the SIB1 repetition period.

If the UE is in the RRC_CONNECTED state:
within the second preset time period, the base station adopts the transmission mode of not transmitting the first information for SIB1 transmission; while within the first preset time period, the base station does not transmit SIB1 at any occasion of the SIB1 repetition period.

Optionally, if the UE is in the RRC_INACTIVE state, the RRC_IDLE state, or the RRC_CONNECTED state, within both the first preset time period and the second preset time period, the base station may adopt the transmission mode of not transmitting the first information for SIB1 transmission.

Optionally, for transmitting the SIB1 with a dynamically adjusted periodicity:
in an implementation, if the UE is in the RRC_INACTIVE state and the RRC_IDLE state:
within both the first preset time period and the second preset time period, the base station adopts the transmission mode of transmitting the first information with the dynamically adjusted periodicity for SIB1 transmission. Specifically, within the active time of cell DTX and the inactive time of cell DTX, the base station transmits DCI format 1_0 including bits of a newly added dynamic adjustment field for the transmission periodicity of the first information to the terminal, to indicate a repetition period of subsequent SIB1 transmission by the network device.

Optionally, the number of bits of the dynamic adjustment field for the transmission periodicity of the first information in the DCI format 1_0 is related to the multiplexing pattern of SSB and CORESET#0.

Optionally, for the multiplexing pattern 1 of SSB and CORESET#0, the number of bits of the dynamic adjustment field for the transmission periodicity of the first information in the DCI format 1_0 may be 2, and each codepoint corresponds to a value in the set L = {0, 1, 2}. For example, bits of '00 correspond to the value 0 in the set, which means the SIB1 repetition period is adjusted to H=20ms*2^0; '01 correspond to the value 1 in the set, which means the SIB1 repetition period is adjusted to H=20ms*2^1; '10 correspond to the value 2 in the set, which means the SIB1 repetition period is adjusted to H=20ms*2^2, and so on.

Optionally, for the multiplexing pattern 2 or 3 of SSB and CORESET#0, the number of bits of the dynamic adjustment field for the transmission periodicity of the first information in the DCI format 1_0 may be 4, and each codepoint corresponds to a value in the set L = {-5, -4, -3, -2, -1, 0, 1, 2, 3, 4, 5}. For example, bit of '00 corresponds to the value -5 in the set, which means the SIB1 repetition period is adjusted to H = SSB_periodicity*2^(-5); '01 corresponds to the value -4 in the set, which means the SIB1 repetition period is adjusted to H = SSB_periodicity*2^(-4), and so on.

Optionally, for the multiplexing pattern 2 or 3 of SSB and CORESET#0, an adjusted SIB1 repetition period H is not less than 5ms and not greater than 160ms. If a value obtained after multiplying the SSB periodicity by 2^L1 is less than 5ms, the adjusted SIB1 repetition period is set to 5ms. Similarly, if the value obtained after multiplying the SSB periodicity by 2^L1 is greater than 160ms, the adjusted SIB1 repetition period is set to 160ms, where L1 is any value in the set L.

If the UE is in the RRC_CONNECTED state:
within both the first preset time period and the second preset time period, the base station adopts the transmission mode of transmitting the first information with the dynamically adjusted periodicity for SIB1 transmission. Specifically, within the active time of cell DTX and the inactive time of cell DTX, the base station dynamically indicates the adjusted SIB1 repetition period to the UE through an RRC message or the DCI format 1_0.

Optionally, the adjusted SIB1 repetition period may be directly indicated in the RRC message. For example, the RRC message directly indicates that the SIB1 repetition period may be 5ms, 160ms, etc..

Optionally, the adjusted SIB1 repetition period may also be indicated in the RRC message as a multiple of the current SIB1 repetition period. For example, it is configured in the RRC message that the SIB1 repetition period is adjusted to M times or 2^N times the current SIB1 repetition period, etc., where M and N are positive integers.

Optionally, an adjustment of the SIB1 repetition period in the downlink control information may also be M times or 2^N times the current SIB1 repetition period.

In the following, an example is provided in which the SIB1 repetition period is adjusted to 2^N times the current SIB1 repetition period in the downlink control information.

Optionally, the number of bits of the dynamic adjustment field for the transmission periodicity of the first information in the DCI format 1_0 is related to the multiplexing pattern of SSB and CORESET#0.

Optionally, for the multiplexing pattern 1 of SSB and CORESET#0, the number of bits of the dynamic adjustment field for the transmission periodicity of the first information in the DCI format 1_0 may be 2, and each codepoint corresponds to a value in the set L = {0, 1, 2}. For example, bits of '00 correspond to the value 0 in the set, which means the SIB1 repetition period is adjusted to H=20ms*2^0; '01 correspond to the value 1 in the set, which means the SIB1 repetition period is adjusted to H=20ms*2^1; '10 correspond to the value 2 in the set, which means the SIB1 repetition period is adjusted to H=20ms*2^2, and so on.

Optionally, for the multiplexing pattern 2 or 3 of SSB and CORESET#0, the number of bits of the dynamic adjustment field for the transmission periodicity of the first information in the DCI format 1_0 may be 4, and each codepoint corresponds to a value in the set L = {-5, -4, -3, -2, -1, 0, 1, 2, 3, 4, 5}. For example, bits of '00 correspond to the value -5 in the set, which means the SIB1 repetition period is adjusted to H = SSB_periodicity*2^(-5); '01 correspond to the value -4 in the set, which means the SIB1 repetition period is adjusted to H = SSB_periodicity*2^(-4), and so on.

Optionally, for the multiplexing pattern 2 or 3 of SSB and CORESET#0, a legacy SIB1 repetition period H is not less than 5ms and not greater than 160ms. If a value obtained after multiplying the SSB periodicity by 2^L1 is less than 5ms, the SIB1 repetition period is set to 5ms. Similarly, if the value obtained after multiplying the SSB periodicity by 2^L1 is greater than 160ms, the SIB1 repetition period is set to 160ms, where L1 is any value in the set L.

In another implementation, if the UE is in the RRC_INACTIVE state, the RRC_IDLE state, or the RRC_CONNECTED state:
within the second preset time period, the base station adopts the transmission mode of transmitting the first information with the dynamically adjusted periodicity for SIB1 transmission; while within the first preset time period, the base station does not transmit SIB1 at any occasion of the SIB1 repetition period.

Optionally, the above RRC states and respective transmission modes of the first information may be combined arbitrarily.

Optionally, the DCI format 1_0 further includes at least one of the following:
a frequency domain resource allocation field, occupying $\left⌈{log}_{2}\left({N}_{RB}^{DL , BWP}\left({N}_{RB}^{DL , BWP}+1\right)/2\right)\right⌉$ bits, where ${N}_{RB}^{DL , BWP}$ is based on the size of CORESET#0;
a time domain resource allocation field, occupying 4 bits;
a virtual-resource-block to physical-resource-block mapping field, occupying 1 bit;
a modulation and coding scheme field, occupying 5 bits;
a redundancy version field, occupying 2 bits;
a system information indicator field, occupying 1 bit.

Optionally, if the terminal device is aware that the network does not transmit SIB1 within a given SIB1 repetition period, the UE is not required to decode the DCI corresponding to that repetition period for SIB1 scheduling.

Optionally, the method further includes at least one of the following:
the uplink wake-up signal is a periodic signal;
the uplink wake-up signal is a pseudo-random sequence related to at least one of: a radio frame number, a slot number, or a cell identity;
the uplink wake-up signal is a reserved preamble in a random access preamble sequence set;
a transmission occasion of the uplink wake-up signal is the same as a transmission occasion of Msg1;
the transmission occasion of the uplink wake-up signal is a valid uplink symbol with an offset of no less than X slots before the nearest occasion for receiving the first information after the uplink wake-up signal, where X is a positive integer;
the transmission occasion of the uplink wake-up signal is a valid uplink symbol with an offset of no less than Z slots before the Y-th nearest occasion of the first information to be received after the uplink wake-up signal, where both Z and Y are positive integers;
the uplink wake-up signal is transmitted on a non-anchor carrier;
the transmission occasion and/or frequency domain position of the uplink wake-up signal is determined from higher layer information on an anchor carrier associated with the non-anchor carrier.

Optionally, the method further includes that the terminal device performs random access according to the first information.

Optionally, the method further includes that the terminal device performs data transmission according to the first information.

Optionally, the method further includes that the terminal device performs paging reception according to the first information.

In the technical solution of this embodiment, the terminal device receives the first information, where the first information is transmitted by the network device in the transmission mode determined based on the second information, so the number of transmissions of the first information can be effectively reduced in a multi-carrier scenario, thereby reducing network energy consumption and/or operation cost.

### Tenth embodiment

Refer to FIG. 18, which is a schematic diagram of an interaction process between a network device and a terminal device in a transmission method according to the tenth embodiment of the present application. The tenth embodiment of the present application provides a transmission method, including the following steps.

S1: the network device transmits first information in a transmission mode determined based on second information.

S2: the terminal device receives the first information, where the first information is transmitted by the network device in the transmission mode determined based on the second information.

Optionally, the network device may be a base station or the like, and the terminal device may be a mobile phone or the like.

Optionally, the second information includes at least one of the following: a radio resource control state, an active time of cell discontinuous transmission, or an inactive time of cell discontinuous transmission.

Optionally, the transmission mode includes at least one of the following: transmitting the on demand first information, not transmitting the first information, transmitting the first information with a regular periodicity, or transmitting the first information with a dynamically adjusted periodicity.

Optionally, the first information includes: system information block 1 and/or system information blocks other than the system information block 1.

Optionally, the transmission mode of the first information adopted by the network device is determined from at least one of the radio resource control state, the active time of cell discontinuous transmission, or the inactive time of cell discontinuous transmission.

Optionally, the system information blocks other than the system information block 1 may be system information such as SIB2 to SIB21.

Optionally, the system information blocks other than the system information block 1 may also be other newly added system information, such as those following SIB21.

Optionally, the solution of this embodiment may be applied to a low-load scenario, for example, a scenario where traffic load of a cell is relatively low or the number of terminal devices in the cell is relatively small. Optionally, the solution of this embodiment may be applied to a multi-carrier scenario, for example, a multi-carrier scenario where CCs (Component Carriers, component carriers) are co-located or a multi-carrier scenario where CCs (Component Carriers, component carriers) are not co-located.

Periodic transmission of SIB1 messages may increase network energy consumption and operation cost in the low-load scenario and/or the multi-carrier scenario. For example, in the low-load scenario, there may be few or no terminal devices requiring to receive a system information. To address this issue, the network device transmits the first information in the transmission mode determined according to the second information, thereby restricting transmission of the first information, such as SIB1, so as to reduce network energy consumption and lower operation cost.

Optionally, the radio resource control state includes at least one of the following: an RRC_INACTIVE state, an RRC_IDLE state, or an RRC_CONNECTED state.

Optionally, the transmitting the on demand first information includes: in response to receiving an uplink wake-up signal, the network device transmits the first information at a transmission occasion satisfying a first preset rule.

Optionally, a reception occasion for receiving the first information by the terminal device includes at least one of:
a position of an occasion of a legacy repetition period of the first information;
a position of an occasion of a dynamically adjusted repetition period of the first information;
a position of an occasion of the nearest repetition period of the first information after an uplink wake-up signal;
a position of an occasion of the Y-th repetition period of the first information after the uplink wake-up signal, where Y is a positive integer.

Optionally, the terminal device transmits the uplink wake-up signal, and the network device receives the uplink wake-up signal.

Optionally, the uplink wake-up signal is transmitted by the terminal device. In this way, transmission of the first information is triggered through the uplink wake-up signal, so the number of transmissions of the first information can be effectively reduced, thereby reducing network energy consumption.

Optionally, the satisfying the first preset rule includes at least one of the following:
the transmission occasion being located no less than X slots after a slot in which the uplink wake-up signal is transmitted, where X is a positive integer;
the position of no less than X slots after the uplink wake-up signal overlapping with a slot in which the nearest retransmission occasion of the first information after the uplink wake-up signal is located;
the transmission occasion being located no less than Z slots after the slot in which the uplink wake-up signal is transmitted, where Z is a positive integer;
the position of no less than Z slots after the uplink wake-up signal overlapping with a slot in which the Y-th nearest retransmission occasion of the first information after the uplink wake-up signal is located, where both Z and Y are positive integers.

Optionally, a value of X is less than a repetition period of the first information.

Optionally, the not transmitting the first information includes: indicating, by transmitting downlink control information and/or a radio resource control message to the terminal device, whether the network device transmits the first information at a corresponding transmission occasion of the first information within a first preset time period.

Optionally, the first preset time period is the inactive time of cell discontinuous transmission.

Optionally, the transmitting the first information with the regular periodicity includes: transmitting the first information at respective transmission occasions of the first information within a second preset time period.

Optionally, the second preset time period is the active time of cell discontinuous transmission.

Optionally, the transmitting the first information with the dynamically adjusted periodicity is: dynamically adjusting a retransmission occasion of the first information by transmitting the downlink control information and/or the radio resource control message to the terminal device.

Optionally, the downlink control information includes at least one of the following: a dynamic adjustment field for a transmission periodicity of the first information, or an activation or deactivation indication field for the first information.

Optionally, the activation or deactivation indication field for the first information is used to indicate whether the base station performs transmission of the first information at one or more occasions within repetition periods of the first information.

Optionally, the number of bits of the dynamic adjustment field for the transmission periodicity of the first information is related to a multiplexing pattern of synchronization signal block and control resource set #0.

Optionally, for multiplexing pattern 1 of SSB and CORESET#0, the number of bits of the dynamic adjustment field for the transmission periodicity of the first information in the downlink control information may be 2, and each codepoint corresponds to a value in the set L = {0, 1, 2} respectively.

Optionally, for multiplexing pattern 2 or 3 of SSB and CORESET#0, the number of bits of the dynamic adjustment field for the transmission periodicity of the first information in the downlink control information may be 4, and each codepoint corresponds to a value in the set L = {-5, -4, -3, -2, -1, 0, 1, 2, 3, 4, 5} respectively.

Optionally, the method further includes at least one of the following:
within the second preset time period, the transmission mode is transmitting the first information with the regular periodicity;
within the second preset time period, the transmission mode is not transmitting the first information;
within the first preset time period and/or the second preset time period, the transmission mode is transmitting the on demand first information;
within the first preset time period and/or the second preset time period, the transmission mode is transmitting the first information with the dynamically adjusted periodicity;
within the first preset time period, the first information is not transmitted.

Optionally, by taking an example in which the first information is SIB1, the terminal device is UE, and the network device is a base station, the above transmission modes are described as follows.

Optionally, for transmitting the first information with the regular periodicity:
in an implementation, if the UE is in an RRC_INACTIVE state and an RRC_IDLE state:
within the second preset time period, the base station adopts the transmission mode of transmitting the first information with the regular periodicity for SIB1 transmission; and within the first preset time period, the base station adopts the transmission mode of transmitting the on demand first information to perform transmission of the SIB1. Specifically, within the inactive time of cell DTX, the base station transmits the SIB1 at a transmission occasion satisfying a first preset rule only after receiving an uplink wake-up signal; while within the active time of cell DTX, the base station transmits the SIB1 according to a legacy SIB1 repetition period.

Optionally, a legacy SIB1 periodicity is 160ms.

Optionally, for the multiplexing pattern 1 of SSB and CORESET#0, within 160ms, the legacy SIB1 repetition period is 20ms.

Optionally, for the multiplexing pattern 2 or 3 of SSB and CORESET#0, within 160ms, the legacy SIB1 repetition period is the same as a periodicity of an SSB associated with the SIB1.

If the UE is in an RRC_CONNECTED state:
within the second preset time period, the base station adopts the transmission mode of transmitting the first information with the regular periodicity for SIB1 transmission; and within the first preset time period, the base station adopts the transmission mode of transmitting the on demand first information to perform transmission of the SIB1. Specifically, within the inactive time of cell DTX, the base station transmits the SIB1 at a transmission occasion satisfying a first preset rule only after receiving an uplink wake-up signal; while within the active time of cell DTX, the base station transmits the SIB1 according to a legacy SIB1 repetition period.

Optionally, if SIB1 transmission is not to be performed in a certain SIB1 repetition period, DCI for scheduling this SIB1 does not need to be transmitted to the terminal. Specifically, if SIB1 transmission is required in a certain SIB1 repetition period, the base station needs to transmit DCI for scheduling this SIB1 to the terminal before the SIB1 transmission; while if SIB1 transmission is not to be performed in a certain SIB1 repetition period, the base station does not need to transmit DCI corresponding to this SIB1 to the terminal.

In another implementation, if the UE is in the RRC_INACTIVE state and the RRC_IDLE state:
within both the first preset time period and the second preset time period, the base station adopts the transmission mode of transmitting the on demand first information to perform transmission of the SIB1. Specifically, within both the active time and the inactive time of cell DTX, the base station transmits the SIB1 at a transmission occasion satisfying a first preset rule only after receiving an uplink wake-up signal.

Similarly, if the UE is in the RRC_CONNECTED state:
within both the first preset time period and the second preset time period, the base station adopts the transmission mode of transmitting the on demand first information to perform transmission of the SIB1. Specifically, within both the active time and the inactive time of cell DTX, the base station transmits the SIB1 at a transmission occasion satisfying a first preset rule only after receiving an uplink wake-up signal.

Optionally, in the above two implementations, for the RRC states, the above behavior restrictions may be combined arbitrarily.

Optionally, for not transmitting the first information (such as no SIB1 transmission):
if the UE is in the RRC_INACTIVE state and the RRC_IDLE state:
within the second preset time period, the base station adopts the transmission mode of not transmitting the first information for SIB1 transmission; while within the first preset time period, the base station does not transmit SIB1 at any occasion of the SIB1 repetition period. Specifically, within the active time of cell DTX, the base station transmits DCI format 1_0 including a newly added activation or deactivation indication field for the first information to the terminal, to indicate whether the network device transmits SIB1 in a corresponding SIB1 repetition period. Assuming that the number of the activation or deactivation indication fields for the first information in the DCI format 1_0 is 1, a bit of 1 represents that there is SIB1 transmission at an occasion of the current SIB1 repetition period, and a bit of 0 represents that there is no SIB1 transmission at an occasion of the current SIB1 repetition period. Within the inactive time of cell DTX, the base station does not transmit SIB1 at any occasion of the SIB1 repetition period.

If the UE is in the RRC_CONNECTED state:
within the second preset time period, the base station adopts the transmission mode of no transmission of first information to perform transmission of the SIB1; while within the first preset time period, the base station does not transmit SIB1 at any occasion of the SIB1 repetition period.

Optionally, if the UE is in the RRC_INACTIVE state, the RRC_IDLE state, or the RRC_CONNECTED state, within both the first preset time period and the second preset time period, the base station may adopt the transmission mode of not transmitting the first information for SIB1 transmission.

Optionally, for transmitting the SIB1 with a dynamically adjusted periodicity:
in an implementation, if the UE is in the RRC_INACTIVE state and the RRC_IDLE state:
within both the first preset time period and the second preset time period, the base station adopts the transmission mode of transmitting the first information with the dynamically adjusted periodicity for SIB1 transmission. Specifically, within the active time of cell DTX and the inactive time of cell DTX, the base station transmits DCI format 1_0 including bits of a newly added dynamic adjustment field for the transmission periodicity of the first information to the terminal, to indicate a repetition period of subsequent SIB1 transmission by the network device.

Optionally, the number of bits of the dynamic adjustment field for the transmission periodicity of the first information in the DCI format 1_0 is related to the multiplexing pattern of SSB and CORESET#0.

Optionally, for the multiplexing pattern 1 of SSB and CORESET#0, the number of bits of the dynamic adjustment field for the transmission periodicity of the first information in the DCI format 1_0 may be 2, and each codepoint corresponds to a value in the set L = {0, 1, 2}. For example, bits of '00 correspond to the value 0 in the set, which means the SIB1 repetition period is adjusted to H=20ms*2^0; '01 correspond to the value 1 in the set, which means the SIB1 repetition period is adjusted to H=20ms*2^1; '10 correspond to the value 2 in the set, which means the SIB1 repetition period is adjusted to H=20ms*2^2, and so on.

Optionally, for the multiplexing pattern 2 or 3 of SSB and CORESET#0, the number of bits of the dynamic adjustment field for the transmission periodicity of the first information in the DCI format 1_0 may be 4, and each codepoint corresponds to a value in the set L = {-5, -4, -3, -2, -1, 0, 1, 2, 3, 4, 5}. For example, bits of '00 correspond to the value -5 in the set, which means the SIB1 repetition period is adjusted to H = SSB_periodicity*2^(-5); '01 correspond to the value -4 in the set, which means the SIB1 repetition period is adjusted to H = SSB_periodicity*2^(-4), and so on.

Optionally, for the multiplexing pattern 2 or 3 of SSB and CORESET#0, an adjusted SIB1 repetition period H is not less than 5ms and not greater than 160ms. If a value obtained after multiplying the SSB periodicity by 2^L1 is less than 5ms, the SIB1 repetition period is set to 5ms. Similarly, if the value obtained after multiplying the SSB periodicity by 2^L1 is greater than 160ms, the SIB1 repetition period is set to 160ms, where L1 is any value in the set L.

If the UE is in the RRC_CONNECTED state:
within both the first preset time period and the second preset time period, the base station adopts the transmission mode of transmitting the first information with the dynamically adjusted periodicity for SIB1 transmission. Specifically, within the active time of cell DTX and the inactive time of cell DTX, the base station dynamically indicates the adjusted SIB1 repetition period to the UE through an RRC message or the DCI format 1_0.

Optionally, the adjusted SIB1 repetition period may be directly indicated in the RRC message. For example, the RRC message directly indicates that the SIB1 repetition period may be 5ms, 160ms, etc.

Optionally, the adjusted SIB1 repetition period may also be indicated in the RRC message as a multiple of the current SIB1 repetition period. For example, it is configured in the RRC message that the SIB1 repetition period is adjusted to M times or 2^N times the current SIB1 repetition period, where M and N are positive integers.

Optionally, an adjustment of the SIB1 repetition period in the downlink control information may also be M times or 2^N times the current SIB1 repetition period.

In the following, an example is provided in which the SIB1 repetition period is adjusted to 2^N times the current SIB1 repetition period in the downlink control information.

Optionally, the number of bits of the dynamic adjustment field for the transmission periodicity of the first information in the DCI format 1_0 is related to the multiplexing pattern of SSB and CORESET#0.

Optionally, for the multiplexing pattern 1 of SSB and CORESET#0, the number of bits of the dynamic adjustment field for the transmission periodicity of the first information in the DCI format 1_0 may be 2, and each codepoint corresponds to a value in the set L = {0, 1, 2}. For example, bits of '00 correspond to the value 0 in the set, which means the SIB1 repetition period is adjusted to H=20ms*2^0; '01 correspond to the value 1 in the set, which means the SIB1 repetition period is adjusted to H=20ms*2^1; '10 correspond to the value 2 in the set, which means the SIB1 repetition period is adjusted to H=20ms*2^2, and so on.

Optionally, for the multiplexing pattern 2 or 3 of SSB and CORESET#0, the number of bits of the dynamic adjustment field for the transmission periodicity of the first information in the DCI format 1_0 may be 4, and each codepoint corresponds to a value in the set L = {-5, -4, -3, -2, -1, 0, 1, 2, 3, 4, 5}. For example, bits of '00 correspond to the value -5 in the set, which means the SIB1 repetition period is adjusted to H = SSB_periodicity*2^(-5); '01 correspond to the value -4 in the set, which means the SIB1 repetition period is adjusted to H = SSB_periodicity*2^(-4), and so on.

Optionally, for the multiplexing pattern 2 or 3 of SSB and CORESET#0, a legacy SIB1 repetition period H is not less than 5ms and not greater than 160ms. If a value obtained after multiplying the SSB periodicity by 2^L1 is less than 5ms, the SIB1 repetition period is set to 5ms. Similarly, if the value obtained after multiplying the SSB periodicity by 2^L1 is greater than 160ms, the SIB1 repetition period is set to 160ms, where L1 is any value in the set L.

In another implementation, if the UE is in the RRC_INACTIVE state, the RRC_IDLE state, or the RRC_CONNECTED state:
within the second preset time period, the base station adopts the transmission mode of transmitting the first information with the dynamically adjusted periodicity for SIB1 transmission; while within the first preset time period, the base station does not transmit SIB1 at any occasion of the SIB1 repetition period.

Optionally, the above RRC states and respective transmission modes of the first information may be combined arbitrarily.

Optionally, the DCI format 1_0 further includes at least one of the following:
a frequency domain resource allocation field, occupying $\left⌈{log}_{2}\left({N}_{RB}^{DL , BWP}\left({N}_{RB}^{DL , BWP}+1\right)/2\right)\right⌉$ bits, where ${N}_{RB}^{DL , BWP}$ is based on the size of CORESET#0;
a time domain resource allocation field, occupying 4 bits;
a virtual-resource-block to physical-resource-block mapping field, occupying 1 bit;
a modulation and coding scheme field, occupying 5 bits;
a redundancy version field, occupying 2 bits;
a system information indicator field, occupying 1 bit.

Optionally, if the terminal device is aware that the network does not transmit SIB1 within a given SIB1 repetition period, the UE is not required to decode the DCI corresponding to that repetition period for SIB1 scheduling.

In the technical solution of this embodiment, the network device transmits the first information in the transmission mode determined based on the second information, and the terminal device receives the first information. In a multi-carrier scenario, the number of transmissions of the first information can be effectively reduced, thereby reducing network energy consumption and/or operation cost.

Please refer to FIG. 19, which is schematic structural diagram I of a transmission apparatus provided in an embodiment of the present application. The apparatus may be installed in or be the network device in the above method embodiments. The transmission apparatus shown in FIG. 19 may be used to perform some or all of the functions described in the method embodiments above. As shown in FIG. 19, the transmission apparatus 160 includes:
a transmitting module 1601, configured to transmit first information in a transmission mode determined based on second information.

Optionally, the transmission apparatus 160 further includes at least one of the following:
the second information includes at least one of: a radio resource control state, active time of cell discontinuous transmission, or inactive time of cell discontinuous transmission;
the transmission mode includes at least one of: transmitting the on demand first information, not transmitting the first information, transmitting the first information with a regular periodicity, or transmitting the first information with a dynamically adjusted periodicity;
the first information includes: system information block 1.

Optionally, the radio resource control state includes at least one of:
an RRC_INACTIVE state;
an RRC_IDLE state;
an RRC_CONNECTED state.

Optionally, the apparatus further includes at least one of the following:
the transmitting the on demand first information includes: in response to receiving an uplink wake-up signal, transmitting the first information at a transmission occasion of the first information satisfying a first preset rule;
the not transmitting the first information includes: indicating, by transmitting downlink control information and/or a radio resource control message to a terminal device, whether a network device transmits the first information at a corresponding transmission occasion of the first information within a first preset time period;
the transmitting the first information with the regular periodicity includes: transmitting the first information at respective transmission occasions of the first information within a second preset time period;
the transmitting the first information with the dynamically adjusted periodicity is: dynamically adjusting a retransmission occasion of the first information by transmitting the downlink control information and/or the radio resource control message to the terminal device.

Optionally, the apparatus further includes at least one of the following:
the first preset time period is the inactive time of cell discontinuous transmission;
the second preset time period is the active time of cell discontinuous transmission;
the satisfying the first preset rule includes at least one of:
   the transmission occasion being located no less than X slots after a slot in which the uplink wake-up signal is transmitted, where X is a positive integer;
   the position of no less than X slots after the uplink wake-up signal overlapping with a slot in which the nearest retransmission occasion of the first information after the uplink wake-up signal is located;
   the transmission occasion being located no less than Z slots after the slot in which the uplink wake-up signal is transmitted, where Z is a positive integer;
   the position of no less than Z slots after the uplink wake-up signal overlapping with a slot in which the Y-th nearest retransmission occasion of the first information after the uplink wake-up signal is located, where both Z and Y are positive integers.

Optionally, the apparatus further includes at least one of the following:
within the second preset time period, the transmission mode is transmitting the first information with the regular periodicity;
within the second preset time period, the transmission mode is not transmitting the first information;
within the first preset time period and/or the second preset time period, the transmission mode is transmitting the on demand first information;
within the first preset time period and/or the second preset time period, the transmission mode is transmitting the first information with the dynamically adjusted periodicity;
within the first preset time period, the first information is not transmitted.

Optionally, the apparatus further includes at least one of the following:
a value of X is less than a repetition period of the first information;
the uplink wake-up signal is a periodic signal;
the uplink wake-up signal is a pseudo-random sequence related to at least one of: a radio frame number, a slot number, or a cell identity;
the uplink wake-up signal is a reserved preamble in a random access preamble sequence set;
a reception occasion of the uplink wake-up signal is the same as a reception occasion of Msg1;
the reception occasion of the uplink wake-up signal is a valid uplink symbol with an offset of no less than X slots before the nearest occasion of the first information to be transmitted after the uplink wake-up signal;
the reception occasion of the uplink wake-up signal is a valid uplink symbol with an offset of no less than Z slots before the Y-th nearest occasion of the first information to be transmitted after the uplink wake-up signal;
the uplink wake-up signal is received on a non-anchor carrier;
the reception occasion and/or frequency domain position of the uplink wake-up signal is determined from higher layer information on an anchor carrier associated with the non-anchor carrier.

Optionally, the apparatus further includes at least one of the following:
the non-anchor carrier and the anchor carrier are inter-band and co-located carriers, intra-band carriers, and/or inter-band and non-co-located carriers;
the downlink control information includes at least one of: a dynamic adjustment field for a transmission periodicity of the first information, or an activation or deactivation indication field for the first information.

Optionally, the number of bits of the dynamic adjustment field for the transmission periodicity of the first information is related to a multiplexing pattern of synchronization signal block and control resource set #0.

The transmission apparatus provided in the embodiments of the present application can execute the technical solutions shown in the above method embodiments. The implementation principles and beneficial effects thereof are similar, and details are not repeated herein.

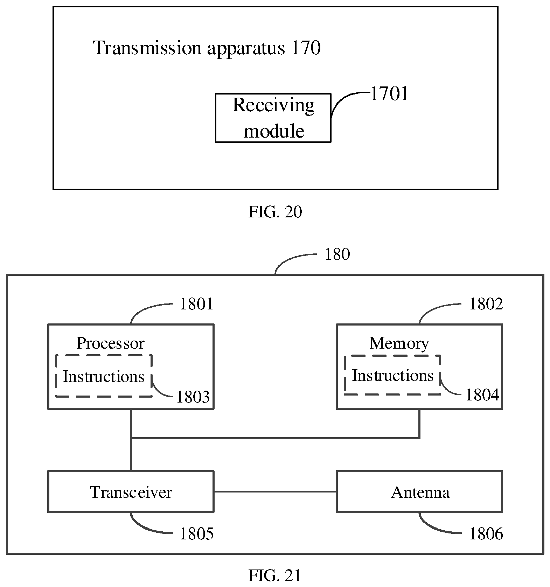

Please refer to FIG. 20, which is schematic structural diagram II of a transmission apparatus provided in an embodiment of the present application. The apparatus may be installed in or be the terminal device in the above method embodiments. As shown in FIG. 20, the transmission apparatus 170 includes:
a receiving module 1701, configured to receive first information, where the first information is transmitted by a network device in a transmission mode determined based on second information.

Optionally, the transmission apparatus 170 includes at least one of the following:
the second information includes at least one of: a radio resource control state, active time of cell discontinuous transmission, or inactive time of cell discontinuous transmission;
the transmission mode includes at least one of: transmitting the on demand first information, not transmitting the first information, transmitting the first information with a regular periodicity, or transmitting the first information with a dynamically adjusted periodicity;
the first information includes: system information block 1.

Optionally, a reception occasion of the first information includes at least one of:
a position of an occasion of a legacy repetition period of the first information;
a position of an occasion of a dynamically adjusted repetition period of the first information;
a position of an occasion of the nearest repetition period of the first information after an uplink wake-up signal;
a position of an occasion of the Y-th repetition period of the first information after the uplink wake-up signal, where Y is a positive integer.

Optionally, the transmission apparatus 170 further includes at least one of the following:
performing random access according to the first information;
performing data transmission according to the first information;
performing paging reception according to the first information.

Optionally, the radio resource control state includes at least one of:
an RRC_INACTIVE state;
an RRC_IDLE state;
an RRC_CONNECTED state.

Optionally, the transmission apparatus 170 further includes at least one of the following:
within the second preset time period, the transmission mode is transmitting the first information with the regular periodicity;
within the second preset time period, the transmission mode is not transmitting the first information;
within the first preset time period and/or the second preset time period, the transmission mode is transmitting the on demand first information;
within the first preset time period and/or the second preset time period, the transmission mode is transmitting the first information with the dynamically adjusted periodicity;
within the first preset time period, the first information is not received.

Optionally, the method further includes at least one of the following:
the uplink wake-up signal is a periodic signal;
the uplink wake-up signal is a pseudo-random sequence related to at least one of: a radio frame number, a slot number, or a cell identity;
the uplink wake-up signal is a reserved preamble in a random access preamble sequence set;
a transmission occasion of the uplink wake-up signal is the same as a transmission occasion of Msg1;
the transmission occasion of the uplink wake-up signal is a valid uplink symbol with an offset of no less than X slots before the nearest occasion for receiving the first information after the uplink wake-up signal, where X is a positive integer;
the transmission occasion of the uplink wake-up signal is a valid uplink symbol with an offset of no less than Z slots before the Y-th nearest occasion of the first information to be received after the uplink wake-up signal, where both Z and Y are positive integers;
the uplink wake-up signal is transmitted on a non-anchor carrier;
the transmission occasion and/or frequency domain position of the uplink wake-up signal is determined from higher layer information on an anchor carrier associated with the non-anchor carrier.

The transmission apparatus provided in the embodiments of the present application can execute the technical solutions shown in the above method embodiments. The implementation principles and beneficial effects thereof are similar, and details are not repeated herein.

Refer to FIG. 21, which is a schematic structural diagram of a communication device provided in an embodiment of the present application. As shown in FIG. 21, the communication device 180 described in this embodiment may be the terminal device (or a component that can be used in the terminal device) or the network device (or a component that can be used in the network device) mentioned in the above method embodiments. The communication device 180 can be used to implement the methods corresponding to the terminal device or the network device described in the above method embodiments. For details, reference is made to the descriptions in the above method embodiments.

The communication device 180 may include one or more processors 1801. The processor 1801 may also be known as a processing unit, and can implement a certain controlling function or processing function. The processor 1801 may be a general-purpose processor, a dedicated processor, or the like. For example, it may be a baseband processor or a central processing unit. The baseband processor may be used to process communication protocols and communication data. The central processing unit can be used to control the communication device, execute a software program, and process data of the software program.

Optionally, the processor 1801 may also store instructions 1803 or data (such as intermediate data). Optionally, the instructions 1803 can be executed by the processor 1801 to cause the communication device 180 to execute the methods described in the above method embodiments corresponding to the terminal device or the network device.

Optionally, the communication device 180 may include a circuit that can implement functions of transmitting, receiving, or communicating as described in the above method embodiments.

Optionally, the communication device 180 may include one or more memories 1802, which can store instructions 1804 that can be executed on the processor 1801 to enable the communication device 180 to perform the methods described in the above method embodiments.

Optionally, data can also be stored in the memory 1802. The processor 1801 and the memory 1802 can be set separately or integrated together.

Optionally, the communication device 180 may further include a transceiver 1805 and/or an antenna 1806. The processor 1801 can be referred to as a processing unit, and controls the communication device 180 (a terminal device, a core network device, or a wireless access network device). The transceiver 1805 can be referred to as a transceiving unit, a transceiver, a transceiving circuit, or a transceiver apparatus, or the like, and is used to implement the transceiving function of the communication device 180.

Optionally, if the communication device 180 is used to implement the operations corresponding to the terminal device in the above embodiments, for example, the first information can be received by the transceiver 1805.

Optionally, for the specific implementation processes of the processor 1801 and the transceiver 1805, reference may be made to the relevant descriptions in the above embodiments, and details are not repeated herein.

Optionally, if the communication device 180 is used to implement the operations corresponding to the network device in the above embodiments, for example, the first information can be transmitted by the transceiver 1805.

Optionally, for the specific implementation processes of the processor 1801 and the transceiver 1805, reference may be made to the relevant descriptions in the above embodiments, and details are not repeated herein.

The processor 1801 and the transceiver 1805 described in the present application can be implemented on an IC (Integrated Circuit, integrated circuit), an analog integrated circuit, an RFID (Radio Frequency Integrated Circuit, radio frequency integrated circuit), a mixed signal integrated circuit, an ASIC (Application Specific Integrated Circuit, application specific integrated circuit), a PCB (Printed Circuit Board, printed circuit board), an electronic device, and the like. The processor 1801 and the transceiver 1805 can also be manufactured using various integrated circuit process technologies, such as a CMOS (Complementary Metal Oxide Semiconductor, complementary metal oxide semiconductor), an NMOS (N Metal-Oxide-Semiconductor, N metal-oxide-semiconductor), a PMOS (Positive cLannel Metal Oxide Semiconductor, positive channel metal oxide semiconductor), a BJT (Bipolar Junction Transistor, bipolar junction transistor), a bipolar CMOS (BiCMOS), Silicon Germanium (SiGe), Gallium Arsenide (GaAs), etc.

In the present application, the communication device may be a terminal device (such as a mobile phone) or a network device (such as a base station), which need to be determined according to the context. In addition, terminal devices can be implemented in various forms. For example, the terminal device described in the present application may include a mobile terminal, such as a mobile phone, a tablet, a laptop, a handheld computer, a personal digital assistant (Personal Digital Assistant, PDA), a portable media player (Portable Media Player, PMP), a navigation apparatus, a wearable device, a smart bracelet, a pedometer, etc., and a fixed terminal device, such as a digital TV, a desktop computer, etc.

Although in the foregoing embodiment descriptions, the communication device is described by taking a terminal device or a network device as an example, the scope of the communication device described in the present application is not limited to the above terminal device or network device, and the structure of the communication device may not be limited by FIG. 21. The communication device may be a standalone device or a part of a larger device.

An embodiment of the present application further provides a communication system including the terminal device as described in any of the above embodiments, and the network device as described in any of the above embodiments.

An embodiment of the present application further provides a communication device including a memory and a processor, where the memory stores a processing program, and when the processing program is executed by the processor, the steps of the transmission method in any of the above embodiments are implemented.

The communication device in the present application may be a terminal device (such as a mobile phone) or a network device (such as a base station), which need to be determined according to the context.

An embodiment of the present application further provides a storage medium having a computer program stored thereon, and when the computer program is executed by a processor, the transmission method described in any of the above embodiments is implemented.

The embodiments of the communication device and the storage medium provided in the embodiments of the present application may include all technical features of any one of the above transmission method embodiments. The expanded and explanatory content in the specification is substantially the same as that of the above method embodiments, and details are not repeated herein.

An embodiment of the present application further provides a computer program product including computer program code which, when run on a computer, causes the computer to perform the method in various possible implementations as described above.

An embodiment of the present application further provides a chip including a memory and a processor, where the memory is used to store a computer program, and the processor is used to call and run the computer program from the memory, so that a device equipped with the chip can execute the method in various possible embodiments as described above.

It can be understood that the above scenarios are merely examples and do not constitute a limitation on the application scenario of the technical solutions provided in the embodiments of the present application. The technical solutions of the present application can also be applied to other scenarios. For example, persons of ordinary skill in the art may appreciate that, with the evolution of the system architecture and the emergence of new service scenarios, the technical solutions provided in the embodiments of the present application are also applicable to similar technical problems.

The serial numbers of the above embodiments of the present application are for description purposes only and do not represent the merits of the embodiments.

The steps in the method of the embodiments of the present application may be adjusted in order, combined, or deleted according to actual needs.

The units in the device of the embodiments of the present application may be combined, divided, or deleted according to actual needs.

In the present application, for the same or similar terminology concepts, technical solutions, and/or application scenario descriptions, they are generally described in detail only on first occurrence, and are generally not repeated for brevity in subsequent occurrences. When understanding the technical solutions and other content of the present application, for the same or similar terminology concepts, technical solutions, and/or application scenario descriptions that are not described in detail later, please refer to previous detailed description thereof.

In the present application, the description for each embodiment has its own emphasis. For parts not detailed or documented in one embodiment, please refer to relevant description in other embodiments.

The various technical features of the technical solution of the present application may be combined arbitrarily. To make the description concise, not all possible combinations of various technical features in the above embodiments have been described. However, as long as there are no contradictions in the combinations of these technical features, the possible combinations should be considered as falling within the scope of the present application.

Through the description of the above embodiments, those skilled in the art can clearly understand that the methods of the above embodiments can be implemented by means of software and a necessary general hardware platform, and of course, they can also be implemented by means of hardware. However, in many cases the former is a better implementation. Based on this understanding, the technical solution of the present application essentially or the portion that contributes to the prior art, can be embodied in the form of a software product. The computer software product is stored in a storage medium (such as an ROM/RAM, a magnetic disk, and an optical disk) as described above, and includes several instructions for causing a terminal device (which may be a mobile phone, a computer, a server, a controlled terminal, or a network device, etc.) to execute the method of each embodiment of the present application.

The above embodiments can be implemented in whole or in part by software, hardware, firmware, or any combination thereof. When implemented using the software, the embodiments can be implemented in whole or in part in the form of a computer program product. The computer program product includes one or more computer instructions. When computer program instructions are loaded and executed on a computer, all or part of the processes or functions according to the embodiment of the present application are generated. The computer may be a general-purpose computer, a dedicated computer, a computer network, or other programmable apparatuses. The computer instructions may be stored in a storage medium or transmitted from one storage medium to another. For example, the computer instructions may be transmitted in a wired manner (such as, through a coaxial cable, an optical fiber, a digital subscriber line) or in a wireless manner (such as, infrared, wireless, microwave, etc.) from one website site, computer, server, or data center to another website site, computer, server or data center. The storage medium may be any available medium that a computer can access or a data storage device such as a server, a data center, etc., which includes one or more available medium integrations. The available medium may be a magnetic medium (such as a floppy disk, a storage disk, a magnetic tape), an optical medium (such as, a DVD), or a semiconductor medium (such as, a solid state storage disk, solid state disk (SSD), etc.).

The above descriptions are only preferred embodiments of the present application, and are not intended to limit the patent scope of the present application. Any equivalent structure or equivalent process transformation made using the description and accompanying drawings of the present application, or direct or indirect application in other related technical fields, are equally included in the patent protection scope of the present application.

## Claims

1. A transmission method, comprising:
transmitting first information in a transmission mode determined based on second information.

2. The method according to claim 1, further comprising at least one of the following:
the second information comprises at least one of: a radio resource control state, active time of cell discontinuous transmission, or inactive time of cell discontinuous transmission;
the transmission mode comprises at least one of: transmitting on demand first information, not transmitting the first information, transmitting the first information with a regular periodicity, or transmitting the first information with a dynamically adjusted periodicity;
the first information comprises: system information block 1.

3. The method according to claim 2, wherein the radio resource control state comprises at least one of:
a radio resource control inactive state;
a radio resource control idle state;
a radio resource control connected state.

4. The method according to claim 2, further comprising at least one of the following:
the transmitting the on demand first information includes: in response to receiving an uplink wake-up signal, transmitting the first information at a transmission occasion of the first information satisfying a first preset rule;
the not transmitting the first information includes: indicating, by transmitting downlink control information and/or a radio resource control message to a terminal device, whether a network device transmits the first information at a corresponding transmission occasion of the first information within a first preset time period;
the transmitting the first information with the regular periodicity includes: transmitting the first information at respective transmission occasions of the first information within a second preset time period;
the transmitting the first information with the dynamically adjusted periodicity is: dynamically adjusting a retransmission occasion of the first information by transmitting the downlink control information and/or the radio resource control message to the terminal device.

5. The method according to claim 4, further comprising at least one of the following:
the first preset time period is the inactive time of cell discontinuous transmission;
the second preset time period is the active time of cell discontinuous transmission;
the satisfying the first preset rule comprises at least one of:
the transmission occasion being located no less than X slots after a slot in which the uplink wake-up signal is transmitted, wherein X is a positive integer;
the position of no less than X slots after the uplink wake-up signal overlapping with a slot in which a nearest retransmission occasion of the first information after the uplink wake-up signal is located;
the transmission occasion being located no less than Z slots after the slot in which the uplink wake-up signal is transmitted, wherein Z is a positive integer;
the position of no less than Z slots after the uplink wake-up signal overlapping with a slot in which a Y-th nearest retransmission occasion of the first information after the uplink wake-up signal is located, wherein both Z and Y are positive integers.

6. The method according to claim 3, further comprising at least one of the following:
within the second preset time period, the transmission mode is transmitting the first information with the regular periodicity;
within the second preset time period, the transmission mode is not transmitting the first information;
within the first preset time period and/or the second preset time period, the transmission mode is transmitting the on demand first information;
within the first preset time period and/or the second preset time period, the transmission mode is transmitting the first information with a dynamically adjusted periodicity; within the first preset time period, the first information is not transmitted.

7. The method according to claim 5, further comprising at least one of the following:
a value of X is less than a repetition period of the first information;
the uplink wake-up signal is a periodic signal;
the uplink wake-up signal is a pseudo-random sequence related to at least one of: a radio frame number, a slot number, or a cell identity;
the uplink wake-up signal is a reserved preamble in a random access preamble sequence set;
a reception occasion of the uplink wake-up signal is the same as a reception occasion of Msg1;
the reception occasion of the uplink wake-up signal is a valid uplink symbol with an offset of no less than X slots before a nearest occasion for transmission of the first information after the uplink wake-up signal;
the reception occasion of the uplink wake-up signal is a valid uplink symbol with an offset of no less than Z slots before a Y-th nearest occasion for transmission of the first information after the uplink wake-up signal;
the uplink wake-up signal is received on a non-anchor carrier;
the reception occasion and/or frequency domain position of the uplink wake-up signal is determined from higher layer information on an anchor carrier associated with the non-anchor carrier.

8. The method according to claim 7, further comprising at least one of the following:
the non-anchor carrier and the anchor carrier are inter-band and co-located carriers, intra-band carriers, and/or inter-band and non-co-located carriers;
the downlink control information comprises at least one of: a dynamic adjustment field for a transmission periodicity of the first information, or an activation or deactivation indication field for the first information.

9. The method according to claim 8, wherein a number of bits of the dynamic adjustment field for the transmission periodicity of the first information is related to a multiplexing pattern of synchronization signal block and control resource set #0.

10. A transmission method, comprising:
receiving first information, wherein the first information is transmitted by a network device in a transmission mode determined based on second information.

11. The method according to claim 10, further comprising at least one of the following:
the second information comprises at least one of: a radio resource control state, active time of cell discontinuous transmission, or inactive time of cell discontinuous transmission;
the transmission mode comprises at least one of: transmitting on demand first information, not transmitting the first information, transmitting the first information with a regular periodicity, or transmitting the first information with a dynamically adjusted periodicity;
the first information comprises: system information block 1.

12. The method according to claim 11, wherein a reception occasion of the first information comprises at least one of:
a position of an occasion of a legacy repetition period of the first information;
a position of an occasion of a dynamically adjusted repetition period of the first information;
a position of an occasion of a nearest repetition period of the first information after an uplink wake-up signal;
a position of an occasion of a Y-th repetition period of the first information after the uplink wake-up signal, wherein Y is a positive integer.

13. The method according to claim 10, further comprising at least one of:
performing random access according to the first information;
performing data transmission according to the first information;
performing paging reception according to the first information.

14. The method according to claim 11, wherein the radio resource control state comprises at least one of:
a radio resource control inactive state;
a radio resource control idle state;
a radio resource control connected state.

15. The method according to claim 11, further comprising at least one of the following:
within the second preset time period, the transmission mode is transmitting the first information with the regular periodicity;
within the second preset time period, the transmission mode is not transmitting the first information;
within the first preset time period and/or the second preset time period, the transmission mode is transmitting the on demand first information;
within the first preset time period and/or the second preset time period, the transmission mode is transmitting the first information with the dynamically adjusted periodicity;
within the first preset time period, the first information is not received.

16. The method according to claim 12, further comprising at least one of the following:
the uplink wake-up signal is a periodic signal;
the uplink wake-up signal is a pseudo-random sequence related to at least one of: a radio frame number, a slot number, or a cell identity;
the uplink wake-up signal is a reserved preamble in a random access preamble sequence set;
a transmission occasion of the uplink wake-up signal is the same as a transmission occasion of Msg1;
the transmission occasion of the uplink wake-up signal is a valid uplink symbol with an offset of no less than X slots before a nearest occasion for receiving the first information after the uplink wake-up signal, wherein X is a positive integer;
the transmission occasion of the uplink wake-up signal is a valid uplink symbol with an offset of no less than Z slots before a Y-th nearest occasion of the first information to be received after the uplink wake-up signal, wherein both Z and Y are positive integers;
the uplink wake-up signal is transmitted on a non-anchor carrier;
the transmission occasion and/or frequency domain position of the uplink wake-up signal is determined from higher layer information on an anchor carrier associated with the non-anchor carrier.

17. A communication device, comprising: a memory, and a processor, wherein the memory stores a transmission program, and when the transmission program is executed by the processor, the transmission method according to claim 1 or 10 is implemented.

18. A storage medium, wherein the storage medium stores a computer program, and when the computer program is executed by a processor, the transmission method according to claim 1 or 10 is implemented.
